(19) Europäisches Patentamt / European Patent Office / Office européen des brevets

(11) **EP 4 137 228 A1**

(12) **EUROPEAN PATENT APPLICATION**
published in accordance with Art. 153(4) EPC

(43) Date of publication:
**22.02.2023 Bulletin 2023/08**

(21) Application number: **21788230.7**

(22) Date of filing: **01.04.2021**

(51) International Patent Classification (IPC):
**B01J 8/02** *(2006.01)*     **B01J 8/12** *(2006.01)*

(52) Cooperative Patent Classification (CPC):
**B01J 8/02; B01J 8/12; B01J 8/16; B01J 8/40**

(86) International application number:
**PCT/JP2021/014182**

(87) International publication number:
**WO 2021/210417 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2020   JP 2020071387**
**31.03.2021   JP 2021059187**

(71) Applicant: **Shigaki, Yoshiki**
**Chiba 270-0138 (JP)**

(72) Inventor: **Shigaki, Yoshiki**
**Chiba 270-0138 (JP)**

(74) Representative: **Danubia Patent & Law Office LLC**
**Bajcsy-Zsilinszky út 16**
**1051 Budapest (HU)**

(54) **PACKED BED, MOVING BED, AND MULTISTAGE FLUIDIZED BED DEVICE HAVING SWING MECHANISM AND ENABLING UNIFORM CONTACT BETWEEN GAS AND POWDER**

(57)     PROBLEM TO BE SOLVED:
In packed beds, moving beds, and multi-stage fluidized beds that use a highly cohesive, easily consolidated powder, uniform contact with gases is not possible due to the occurrence of channeling, and therefore the device that does not allow occurring of channeling and enables the use of such a powder is desired.

[Solution]
According to the present invention, the occurrence of the channeling is suppressed by installing at least one pair of plate consisting of a horizontally swinging perforated plate 5 and a static perforated plate 4 inside a packed bed 3 or a moving bed that is aerated from below, and giving a horizontal swinging motion to the swinging perforated plate 5 so as to transmit a horizontal swinging motion to the powder, whereby heretofore impossible uniform gas-solid contact is made possible in packed beds, moving beds, or multi-stage fluidized beds device using highly cohesive, easily consolidated or compacted powder, and the occurring of consolidation and compaction of the powder are suppressed by these perforated plates in the powder bed. Furthermore, in multi-stage fluidized beds equipped with this swinging mechanism, the motion of the swinging plate enables uniform gas-solid contact, even if the gas flow rate is less than minimum fluidizing velocity

[Fig.5]

**Description**

PROBLEM TO BE SOLVED: To provide packed beds moving bed and multi-stage fluidized beds device capable of uniform gas-powder contact provided with a swinging mechanism.

[Technical field]

In treatments such as drying and reaction due to contact between gas and particles, the treatment rate and reaction rate of fine powder having a small particle size and a large specific surface area is faster and more advantageous. Therefore, the particle size of the catalyst used in the solid catalytic reaction is small like several microns, and in recent years, nanometer size catalysts are using to obtain higher activity as well. Packed beds are used as a reactor using solid catalysts. The main reason for this is that the volumetric efficiency of the reactor is higher than and is more compact than the fluidized bed device which is a complete mixing reactor.

However, in packed beds reactor filled with such a fine particle catalyst, when the catalyst is packed tightly in a fine powder state, the pressure drop of the gas flow becomes large and the distribution of gas velocity becomes easily uneven. Therefore, when fine particles catalysts are used, in general, those are attached on the surface of large inert particles called as a carrier, then these catalysts attached on the large particles are filled to use.

On the other hand, when the fine powder is used in packed beds, in the bottom part of the packed beds, the powder compaction is easy to occur due to the weight of the powder itself. Further, when the gas is aerated into this powder bed, drift such as localized channeling is easy to occur. Due to this occurrence of the drift, uniform gas-powder contact in the bed becomes impossible. So far, in order to avoid the occurrence of such problems, such fine powders have not been directly used in packed bed reactors and moving bed reactors.

In present invention, even in case of using such fine powder that easily occurs drift is used, uniform gas-fine powder contact is enabled by implementation of a mechanism to suppress the occurrence of the drift into packed beds, moving beds, multi-stage moving beds, and multi-stage fluidized beds.

[Background technology]

As devices in which gas and powder are contacted for drying or reaction, packed beds, moving beds, and a fluidized bed are used. In such devices in which gas and powder are contacted and treated, uniform gas-powder contact is an extremely important factor that controls the volumetric efficiency of the device.

However, whether this uniform contact is possible or not, its difficulty is greatly depends on the properties of the powder.

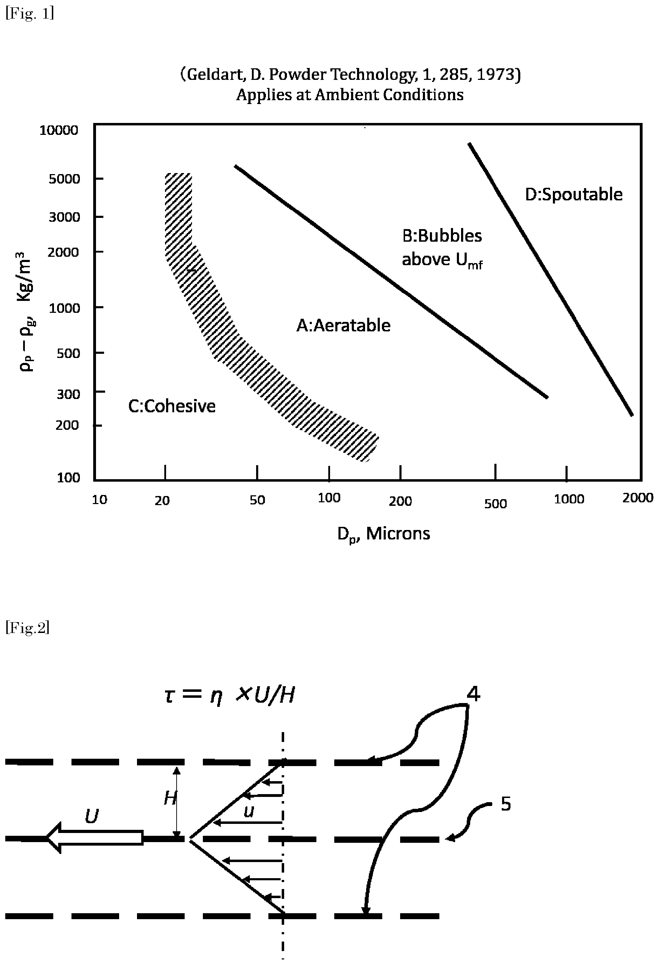

In the fluidized bed, which is a complete mixing device and the device for the uniform gas-powder contact, it is essential for accomplish the uniform gas-powder contact to realize uniform fluidizing to prevent the occurrence of the drift. However, even in this fluidized bed, when the fine powder is used, the uniform fluidization becomes difficult. The difficulties of this fluidization is shown in Fig. 1 which is Geldart's classification diagram on the fluidity of the fluidized bed according to the relationship between the average particle size and the density of the particles, (Geldart D., Powder Technology, 1, 285, 1973).

In Fig 1, the horizontal axis is the particle diameter, and the vertical axis is the difference between particle and fluid densities. The symbol "A" indicates the region in which normal fluidizing is possible, the symbol "B" indicates the region in which large bubbles are generated at fluidizing, and the symbol "D" shows the spouting bed region in which bubble size becomes larger and some of particles are entrained and spouted by gas flow. Here, the symbol "C" indicates the region in which uniform fluidizing is difficult and the drift is easy to occurred due to its strong cohesiveness of the fine powder, which is smaller particle size. According to this Figure, the smaller particles than $20\mu$m tend to aggregate and belong to this "C" region.

In packed beds and moving beds, the gas flow velocity passing through the powder bed is lower than the minimum fluidizing velocity, so in these powder beds the conditions are easy to cause the drift than that of in normal fluidizing beds. (So, the boundary line between the "C" and "A" regions would be shifted to the right hand side compared with Fig. 1.)

In a powder processing device, in which gas is aerating into the fine powder, it is an extremely important technical factor to prevent the occurrence of the drift and to accomplish uniform gas-solid contact.

The present invention is focusing on packed beds and moving beds using fine powders, which are easily occur the drift. Before detailed description, the reason why the present invention focusing on not fluidized bed but on packed beds and moving beds is clarified. According to the Chemical Engineering Handbook, 4th Edition, Page 1446, it is shown that packed beds are superior to the complete mixing reactor such as a fluidized bed on the view point of volumetric efficiency of the reactor. In this Handbook, taking the first- order reaction as an example, the ratio of the required volume $V_P$ of the packed bed reactor to the required volume $V$ of a complete mixing reactor to obtain the same conversion rate is represented by Eq. 1.

[Eq. 1]

$$\frac{V}{V_P} = 1 + \left(\frac{k\theta}{uL}\right) D_L$$

Where, $k$ is the reaction rate constant, $\theta$ is the reaction time, u is the flow velocity of the fluid, $L$ is the axial (flow direction) length of the reactor, and $D_L$ is the axial mixing diffusion coefficient (the mixing degree in axial direction). In the cases of occurring same reaction in the packed bed and the fluidized bed, when the reaction time $\theta$ and the flow velocities u of the passing fluid in these reactors are same, the flow velocity distributions of the fluid and the powder in the packed bed are flat, that is plug-flow, and back mixing does not occur, therefore, the value of the mixing diffusion coefficient $D_L$ is zero. On the other hand, when the fluidized bed is a complete mixing reactor, since the value of mixing diffusion coefficient $D_L$ is large, the reactor volume $V$ of the fluidized bed is larger than the volume $V_P$ of the packed bed reactor, that is, $V/V_P > 1$. This means that the volumetric efficiencies of moving bed reactors are always higher than those of the fluidized bed reactors. Furthermore from Eq.1 in order to increase the volumetric efficiency of the reactor, the suppressing of back mixing of gas and powder in the reactors is important to minimize the axial mixing diffusion coefficient.
Therefore, in the device aimed in the present invention, it is important to minimize back mixing of gas and powder as much as possible and realize flat flow of gas velocity distributions of gas and powder to and to prevent the occurrence of a short pass of gas flow due to the drift such like as channeling.
When using fine particles that are prone to the drift in packed beds and moving beds, if the motility of the particles could be increased by giving some external power and the generated the drift could be constantly break down, then uniform gas-solid contact in the packed beds and moving beds could be established.
Another issue when using fine powder in the "C" region is the easy occurring of compaction around the bottom of powder bed due to the weight of the powder itself, when the height of the fine powder bed is heaped up higher. By this occurring of the compaction, the pressure drop of the gas flow through it becomes extremely larger. So far, in order to avoid this occurring of the compaction, fine powders or powders that are easily consolidated have not been directly used into packed beds and moving beds.
Here, regarding to the pressure drop in the packed bed filled with powder, it can be calculated by the famous Kozeny-Carman equation (Philip C. Carman "Trans. Inst. Chem. Engrs."., London, 15.150, 1937), Eq. 2.
By Eq. 2, the pressure drop of the packed bed $\Delta P$ increases in inverse proportion to the square of the particle size $D_P$, and is also proportion to a function $(1-\varepsilon)^2/\varepsilon^3$ of the porosity $\varepsilon$ of the powder bed. Where, $V_0$ is the superficial velocity in the reactor, $\mu$ is the viscosity of the fluid, and $\Phi_S$ is the shape factor of the particles.
As a trial calculation example, when the particle size is changed from 200$\mu$m to 20$\mu$m fine powder, that is 1/10, the pressure drop of fine powder bed calculated as 100 times by Eq. 2.
In addition, the impact of the compaction is expressed by the porosity function $(1-\varepsilon)^2/\varepsilon^3$.
For example, when the powder bed is compacted, then the porosity $\varepsilon$ becomes small as 0.1, the value of this function is calculated as 810 which is extremely high value. On the other hand, when compaction is not occurred and the powder bed is loosened to obtain low density, then its porosity $\varepsilon$ becomes as large as 0.8, the value of this function becomes 0.078 ≒ 1/13, and the pressure drop is conversely greatly reduced.
That is, in packed beds and moving beds using such fine powder, it is important to prevent compaction, sufficiently to loosen the bulk density of the powder bed and to keep the porosity $\varepsilon$ large (=lower the bulk density).

[Eq. 2]

$$\frac{\Delta P}{L} = \frac{180 V_o \mu}{\phi_s^2 D_p^2} \frac{(1-\varepsilon)^2}{\varepsilon^3} \propto \frac{1}{D_p^2} \frac{(1-\varepsilon)^2}{\varepsilon^3}$$

As an existing powder processing device for fine powder without causing the drift and compaction, an inclined rotary kiln is well known and can handle the fine powder by rotating the inclined cylinder. The powder flow in this rotary kiln is opposite of the gas flow and the rotary kiln is one of counter flow devices and moving beds.
However, in the rotary kiln, gas is not passing through the inside of powder bed, it contact with the rolled up powder by rotation of the cylinder during pass through the inside of the cylinder. Here, the issue of the drift is not occur because the powder inside of this kiln is always rolling by this cylinder rotation.

However, the rotary kiln is an inclined horizontal type device and the powder is exist only lower part and its volumetric ratio is about 5 to 30%. That is, its volume efficiency is quite low. Furthermore, when large through-put or longer processing time are needed, rotary kilns need longer length and wide installing areas.

So far, for the powder which is prone to occur the drift, the powder processing device, which can uniform contact between gas and fine powder and vertical type, is not existed. In the present invention, for the vertical packed bed and moving bed, particularly when those are using fine powder that tends to cause the drift, by applying kinetic energy to the fine powder using some kind of power, the occurring of the drift is suppressed and uniform contact between gas and powder is enabled, it provides the devices which have high volumetric efficiency.

[Prior Art Document]

[Patent Document]

[Patent Document 1] As a powder processing device using fine powder, in the utility model patent of JP-1992-125185, in a box-shaped and laterally longer fluidized bed, in which the fine powder is charged, a plural of vertical comb-shaped rotary blades as agitators are installed directly above the distribution plate at bottom. And by rotating of those blades driven by external dynamic force, it is shown that the occurring of the drift can be suppressed and accomplished stable fluidized bed. However, when this technology is applied to packed beds and moving beds, the entire powder in those beds are mixed, then the plug-flow property of the powder, which is a feature of the packed bed and the moving bed, is impaired, so that this technology cannot be applied to the present development.

[Patent Document 2] Many applications of vibrating fluidized beds given vibration to the entire fluidized bed such as Japanese Patent Application JP-2018-065134 and JP-1997-290143 have been proposed. All of them is common in the points, in which these use external dynamic force other than fluidized gas and are effective methods for fine powder fluidization. But, all of these is the technology to make a stable fluidized bed. So, this technology cannot be applied to packed beds or moving beds same as Patent Document 1.

[Patent Document 3] In Japanese Patent Application JP-1981-20992, JP-1982-127422, and JP-1984-210293, inventions relating to a shelf-type multi-stage fluidized bed are described. In these multi-stage fluidized beds, since the superficial gas velocity aerated is higher than the minimum fluidizing velocity and the entire of inside particles is fluidizing, that is, it is the multi-fluidized bed. However, these inventions cannot be applied for fine particles (particles in the "C" region) which are prone to generate the drift, which is an issue.

Non-Patent Document

[Non-Patent Document 1] As a prior article dealing with fine powder belonging to Geldart's C classification, "Volatilization, desorption and decomposition of dioxins in fly ash from a waste incinerator using heating device", Toru Shiomitsu and Other, JFE Steel Co., Ltd., NKK Technical Report, (176) 2002, 03 was published. In this document, it is described about a stirred fluidized bed in which several horizontal stirring rods are installed in a cylindrical fluidized bed to suppress the generation of the drift by rotation of the stirring rods to make uniform heat-treatment of fly ash. In the point which can treat fine powder, the object of this device is same as the present invention, but it is a fluidized bed which makes complete mixing, and this method cannot be applied to packed beds and moving beds.

[Summary of the invention]

[Problems to be solved by the Invention]

According to prior patents and articles, in powder processing devices or powder treating reactors which use fine powder are applied the methods to suppress the occurring of the drift by vibrating the entire device or stirring the entire powder with rotating blades (or rods). But, all of these devices is fluidized bed having complete mixing property, which is suitable to create and maintain stable fluidizing state (complete mixing state). However, it is not an applicable method to packed beds or moving beds where plug-flow property is important.

When packed beds or moving beds using fine powder that easily generates the drift is used as a powder processing device or reactor, in addition to the realizing of uniform air- solid contact by preventing the drift, it is important to suppress the powder mixing in the vertical direction as much as possible.

Namely, for the powder processing devices aimed in the present invention, the horizontal movement of the powder is preferable, but its vertical movement should be suppressed as much as possible.

In the stirring fluidized bed of Non-Patent Document 1, the motion used is a rotation, which prevents the occurrence of the drift, but cannot maintain the plug-flow property of gas and powder. The essential reason is the centrifugal force generated by rotation. Centrifugal force increases in proportion to the radius position even at the same rotation speed. Therefore, the centrifugal forces of near the wall and of the center side are not the same. Since the powder near the center is pushed toward the wall by this centrifugal force, the height of the powder bed in the center is lowered. On the other hand, since the radius near the wall side is larger, the powder near the wall is pushed against the wall by the larger centrifugal force, then rises upward. As a result, a large circulating flow is generated in the powder bed like as in the stirring tank reactor. That is, in this rotation method, even if the applied motion is only the horizontal motion component, the powder bed becomes a complete mixing state due to the centrifugal force that increases in proportion to the radial position. So, this method is not suitable for packed beds or moving beds.

In order to prevent the vertical mixing of gas and powder, the motion given to the powder should be only horizontal motion and the generation of the drift is suppressed by this horizontal motion. However, the motion type, which is not be the rotation and does not causes the centrifugal force as described above, is desired. By using this type of motion, even in packed beds and moving beds using the fine powder which easily generate the drifts, the plug-flow properties of gas and powder is possible to maintain by suppressing the generation of the drift. In addition, when using powder that is easily compacted by the weight of the powder itself, the mechanism which gives this horizontal motion should share and support the weight of the powder bed, and then the compaction of the powder bed can prevents is desired.

[Means for solving problems]

The present invention provides a motion mechanism in which the fine powder that easily generates the drift in packed beds and moving beds can be used. In each stage of the multi-stage fluidized beds is the complete mixing state. However, since the whole mixing characteristic of these devices works same as that of moving beds, the object of the present invention includes this multi-stage fluidized bed in addition to packed beds and moving beds.

When the fine powder that easy to generate the drift is treated in packed beds, moving beds, and multi-stage fluidized beds, the motion given to the powder should not be so as to occur the problem caused by the rotation above-mentioned. The new motion mechanism provided in the present invention must satisfy following two at the same time,

1. Giving the same horizontal motion velocity at everywhere in the horizontal plane in the powder bed.

2. Especially, when fine powder is used, the compaction in the powder bed should be prevented. For the sake of this purpose, the increasing of bulk density of the powder bed should not make increasing.

Conventionally, in the case of powders which easily generate the drift are using for packed beds, moving beds, and multi-stage fluidized beds, when the gas is aerated into those beds, the drift like as channeling is easily occurred. Therefore, so far, since the uniform gas-solid contact is difficult to accomplish, the fine powder has not been used for these devices. In this present invention, the method to accomplish the uniform gas-solid contact is given by using horizontal annular swinging motion instead of the rotating motion, as the method of improving the fluidity of such fine powder and assisting the horizontal motion of particles.

The horizontal annular swinging motion used in the present invention is similar to the motion using in a sieve shaker, a shaking stirrer. In this swinging motion, unlike the rotating motions of the stirring blades or the stirring rods, the direction, the velocity and the acting force of the motion can be the same at any position in the same horizontal plane. Moreover, after the device was scaled-up, the same shear stress distribution in the device after the scaled-up can be easily reproduced as before the scaled-up.

As the means to provide an annular swinging motion in the fine powder bed, horizontal plates are used. But, these horizontal plates are used perforated plates having multiple holes not to obstruct the vertical flow of gas and the horizontal swinging motion is given to these plates. Moreover, another horizontal perforate plates which are fixed and kept a certain space with the swinging perforated plates are used as static perforated plates. These are used as one pair. A pair of these perforated plates is installed in the powder bed. Then, the horizontal swinging motion is given only to the swinging perforated plate. Then by this horizontal annular swinging motion generates shear stress between the swinging plate and the static plate, and this shear stress averages the bulk density of the powder on these perforated plates, and as a result, the occurrence of the drift is prevented and the uniform contact between gas and solid is enabled.

Here, when only the swinging plate is installed without installing the static perforated plate, the sandwiched powder bed between two horizontal plates moves horizontally with these swinging plates, the velocity distribution and shear stress in the sandwiched powder bed do not occur. However, sandwiching the powder bed between static and swinging perforated plates, the shear stress is generated in the powder bed between them. Since this shear stress works to average and to make uniform bulk density of the powder bed and can prevent the occurrence of the drift. Therefore, the combination of this swinging and static perforated plates is indispensable in the powder bed.

The swinging and static perforated plates installed in the powder bed support the weight of the powder on each plate and prevent the loading of entire weight of the powder to the bottom, and then suppresses the compaction and increasing of the bulk density of the powder at the bottom. Moreover the uniform contact between gas and solid is enabled by preventing the occurring of channeling and increasing of the pressure drop.

[The invention's effect]

By the present invention, when the fine powder which easy generates the drift or the compaction whereby the pressure drop of the powder bed is increased is used to packed beds and moving beds, by applying the swinging mechanism of this invention, the occurrences of drift and the compaction can be prevented. These are the main objects of the present invention. Therefore, the uniform contact between gas and powder which were conventionally impossible can be enabled, then the device which is perpendicular and having a high volumetric efficiency can be accomplished.

The effects described belows can be expected by applying this swinging motion of the horizontal perforated plates.

Multi-stage fluidized bed

Even when fine particles in the "C" region of Geldart's classification, which is difficult to fluidize, are used, by applying the swinging perforated plate in the powder bed to promote the movement of the fine powder, the stable fluidization can be accomplished. And, by stacking the fluidized bed number, multi-stage fluidized beds having moving beds-like mixing characteristic as an entire device can be accomplished.

In a fluidized bed, the gas flow velocity needs to be larger than the minimum fluidizing velocity of the powder in order to fluidize the particles, but in the present invention, by adding the kinetic energy of the swinging plates to that from the gas flow, the entire particles can make moving and be mixing like a fluidized bed even under the condition of the minimum fluidizing velocity. That is, even under the condition that the gas flow velocity is lower than the fluidization start rate, the powder moving state which is close to that of fluidizing state is possible to generate.

In each stage of multi-staged fluidized bed described above, since there is no static perforated plate and the upper surface of the powder bed is open and a vacant space, so the shear stress in the powder above the swinging plate is not generated. Especially in the case of using of fine powder which has inferior fluidity, a trench of powder is generated near the wall when the swinging plate pulls back, whereby gas flow concentrates to this trench and this causes the drift. By installing flat plates or strip- shaped vertical plates which reaches from the lower surface of the distribution plate of the upper stage to the downward inside of the powder bed, the shear stress in the powder bed can be generated, whereby the generation of this trench can be suppressed and a stable fluidizing state is enabled to keep.

Crushing agglomerated powder

When using powder that easily agglomerates, for preventing the agglomeration and crushing the agglomerated clumps, by narrowing the distance between the swinging and the static perforated plates, or by increasing the swinging speed of the plate, the shear stress between two perforated plates is strengthened, it is possible to enhance crushing power of the agglomerated clumps. Furthermore, it is possible to strengthen the crushing force by attaching protrusions on the upper surface or the lower surface or both sides of the swinging and the static perforated plates, which do not contact with each other.

Prevention of compaction and bridging in powder storage tanks

By installing plural pairs of static perforated plate and swinging perforated plate in the powder storage tank, bridging problem often caused by generation of compaction in the powder storage tank can be prevented. In addition, even if the bridging occurs, it is possible to crush by horizontal swinging motion of the swinging plates, a powder storage tank is realized, in which the powder is easily discharged without a bridge breaker.

As described above, in the packed bed and the moving bed which are using the fine powder, the device installing the swinging and static perforated plates alternately, the following features can be obtained by horizontally swinging of only the swinging perforated plates.

1. The occurrence of the drift due to gas flow can be suppressed. The plug-flow property of the gas flow does not be impaired by this swinging motion. And, the plug-flow property of the descending powder flow in moving beds can be kept as well. As a result, uniform gas-powder contact can be accomplished.

2. By installing plural pairs of swinging and static perforated plates in the powder bed, the compaction of the powder can be prevented. As a result, the increasing of pressure drop of gas flow in the powder bed can be prevented.

3. In the multi-stage fluidized bed, by using this swinging motion, the utilizing of the powder which is hard to fluidize is possible. And, even in the condition of smaller gas flow velocity than the minimum fluidizing gas velocity, in which the fluidizing is impossible, a similar state to fluidization can be obtained by this swinging motion. This means the expansion of the applicable particle size range and in addition the operating condition range.

[Simple explanation of drawings]

[Fig. 1] Geldart's classification diagram on fluidization which shows the ease of fluidization of powder in a fluidized bed.

[Fig. 2] Relationships of powder flow velocity distribution and shear stress between two static perforated plates in the powder bed, when a horizontally swinging perforated plate in the middle of the two static perforated plates in the powder bed is sliding.

[Fig. 3] The rotating state of the swinging perforated plate 5 caused by the rotation of the eccentric cam.

[Fig. 4] The rotating motion of the swinging perforated plate 5 caused by the rotation of the eccentric cam is restrained by the pin 14 and a hole that allows the swinging motion of the plate, whereby the rotating motion is converted to a circular swinging motion by this restraint.

[Fig. 5] Cylindrical packed bed equipped with a swinging mechanism that enables uniform gas-powder contact. (Perspective view)

[Fig. 6] Schematic image of a rectangular parallelepiped moving bed (Perspective view) [Fig. 7] Schematic image of internal swinging and static perforated plates in a rectangular parallelepiped device (Perspective view and Plane view)

[Fig. 8] Relationship diagram of each dimension such as inner diameter of cylindrical device, the eccentric distance of the cam, swinging motion diameter, swinging perforated plate diameter.

[Fig. 9] Relationship among the long diameter RC1 of the eccentric cam of the rectangular swinging plate, the size of the ring, and the swinging distances in the X and Y directions.

[Fig. 10] Example of a supporting method for perforated plates (side view, perspective view, plane view)

[Fig. 11] Example of a setting method of a static perforated plate (plane view, side view)

[Fig. 12] Holding example 1: holding method of a swinging perforated plate (plane view, side view)

[Fig. 13] Holding example 2: holding method of a swinging perforated plate (plane view, side view)

[Fig. 14] Holding example 3: holding method of a swinging perforated plate (plane view, side view)

[Fig. 15] Examples of protrusions on swinging and static perforated plates, and reinforcing ribs.

[Fig. 16] Schematic diagram of the experimental observation equipment and the measurement of differential pressure.

[Fig. 17] Image of top surface sinking of powder bed during the powder is discharging from the bottom.

[Fig. 18] Schematic view of a shelf type multi-stage fluidized beds device equipped swinging plates.

[Fig. 19] Image of powder discharging in a down comer by the motion of a swinging plate.

[Fig. 20] Movement of powder near the wall caused by the motion of the swinging plate, and the appearing of trench.

[Fig. 21] Example of vertical partition plates attached to the lower surface of a static plate in order to restrict the movement of the upper surface of the powder bed on the swinging plate.

[Fig. 22] Comparison of powder behavior on the swinging plate with and without the vertical partition plates.

[Modes for Carrying Out an Invention]

First, the relationship between the horizontal swinging motion for preventing the occurrence of the drift which is the essence of the present invention and the forces given to the powder by the swinging motion is described. Fig. 2 shows three horizontal perforated plates buried in the powder bed. The central perforated plate 5 moves horizontally at a velocity $U$, and the two upper and lower perforated plates 4 at the position of the distance $H$ are static and do not move.

Here, for the simple description, this powder bed is assumed to be a fluid. The powder beds above and below the perforated plate 5 is horizontally dragged by the movement of the perforated plate 5, and the motion component in the vertical direction is zero, so that a velocity gradient $du/dh = U/H$ is generated here. Then, by this velocity gradient, the shear stress is generated in the powder beds between the plates 4 and 5. Where, the relationship between the velocity gradient and the shear stress $\tau$ is expressed by Eq. (3).

[Eq. 3]

$$\tau \propto \frac{du}{dh} = \eta \frac{du}{dh}, \qquad \tau \propto \frac{U}{H}$$

Here, $\eta$ is the apparent viscosity of the powder.

By the horizontal movement of the central horizontal plate, the shear stress is generated in the powder bed, and this shear stress averages bulk density in the powder bed and prevent the drift like channeling caused by the non-uniformity of the bulk density distribution or to minimize the effect of it.

Here, it should be noted that above description about Fig. 2 and Eq. (3) is for the case of a fluid in which the internal pressure acts isotropic. That is, the lower surface of the upper static plate and the powder bed in Fig. 2 is closely contact with each other, and the frictional force on this surface is the same as that acts at the upper surface of the swinging plate. However, in the case of powder, the powder pressure does not act isotropic, mainly acts only to the downward direction, and hardly acts to the upward direction. When the swinging perforated plate moves horizontally in the powder bed, the frictional force between the powder bed and the upper static perforated plate is not sufficiently generated. That is, it is similar to slipping. As a result, the shear stress in the powder bed on the swinging plate is not generated, and the powder moves like a lump on the swinging plate. In this case, the averaging of the bulk density of the powder bed is not occurred. Therefore, as described above, a method for restraining the movement of the powder at the upper surface of the powder bed to generate the shear stress inside of the powder bed is necessary.

In the present invention, the horizontal swinging motion is used as the horizontal motion applied to the flat plate in the powder. That is same as a motion mode used in a sieve shaker and a swinging stirrer described above. However, the different point with the present invention from them is the swinging mechanism is embedded in the powder bed and the motion is transferred only to the powder. Therefore, in the designing and manufacturing the parts used in this mechanism, the care to prevent powder biting and powder sticking in the power transmission unit should be taken.

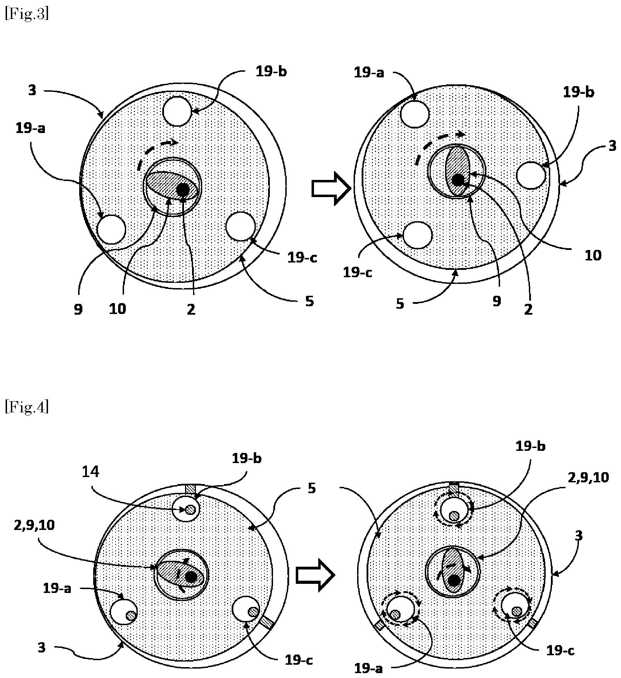

Next, the concept of the mechanism to generate the swinging motion installed in the device of the present invention is described with reference to Figs. 3 and 4.

The Figure on the left side of Fig. 3 shows that the eccentric cam 10 rotates with the rotation of the rotating shaft 2 in the center. The long end of the eccentric cam 10 is contacted with the inside of the ring 9, and its rotation pushes the ring 9, then, the swinging perforated plate 5 attached with the ring 9 moves to rotate. The Figure on the right side of Fig. 3 shows the state after the eccentric cam 10 is rotated about 90 degrees. From the comparison of the left and right Figures, it is shown that the swinging perforated plate 5 is rotated, and the positions of the three holes 19-a, b, and c of the swinging perforated plate 5 are rotated about 90 degrees.

Next, in the example shown in Fig. 4, in addition to the same structure, vertically standing pins 14 is projected from three positions of the inner wall toward the center of the device 3. These standing pins are passing through the holes 19-a, b, and c, respectively. And the rotating movement of the swinging perforated plate 5 is restrained by the pin 14 and is limited to move within the range of this hole. As a result, unlike Fig.3, even the positions of the holes 19-a, b, and c are not changed much, and its movement are converted into a horizontal circular swinging motion within the range of the holes. As described above, by combination of the rotating motion caused from the rotating motion of the eccentric cam and the restraining mechanism of the rotating motion, the circular swinging motion can be generated from the rotating motion of the center shaft 2. In this example, the holes 19 and the pins 14 passing through the holes 19 are used as the mechanism to convert the rotational motion, but other various mechanisms to convert the rotational motion into the swinging motion can be devised. Therefore, the mechanism generating such circular swinging motion is not limited to the methods described above.

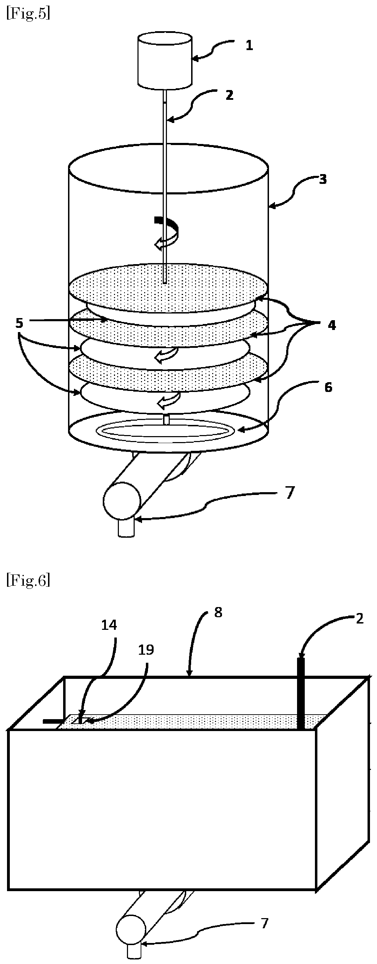

Fig. 5 shows the schematic diagram of the moving bed incorporating the swinging mechanism described above. That is, the perforated plate 5 capable of horizontally swinging motion described in Fig. 4 and the static perforated plate 4 fixed at a predetermined distance thereof are paired with each other, and three pairs are stacked in the powder bed at a predetermined distance. And by sharing the entire powder weight in the device with these perforated plates, the compaction occurring in the powder bed is suppressed, thereby the increasing of the pressure drop of the gas passing through the powder bed is suppressed.

And, by rotating the shaft 2 penetrating these horizontal plates, horizontal swinging motion is given only to the swinging perforated plate, the shear stress is generated in the powder between the static and swinging perforated plates. Whereby the occurrence of the drift is suppressed without impairing the plug-flow property in the powder bed and the uniform gas-powder contact in moving beds can be accomplished.

In Fig. 5, the powder can be continuously discharged from the discharging port 7. That is, the raw material powder charged from the upper part of the device can be continuously and quantitatively discharged after some extent of treatment inside of the device.

Here, it is assumed that both the swinging and the static perforated plates are buried in the powder in this device, and the frictional force between the powder and the lower surface of each plate is sufficiently working. Although it depends on the property of the powder, if the frictional force at the lower surface of the plate in the powder bed does not work and a slipping is occurring, modification for generating the shear stress by attaching the vertical partition plates reaching the lower surface of each plate is necessary as described above.

On the other hand, the downward pressure due to the powder weight works on all the plates and the bottom plate in the device. In other words, the powder weight above each stage is supported by the plate of each stage. As a result, the occurring of powder compaction at the bottom by loading the entire powder weight to the bottom of the device is prevented.

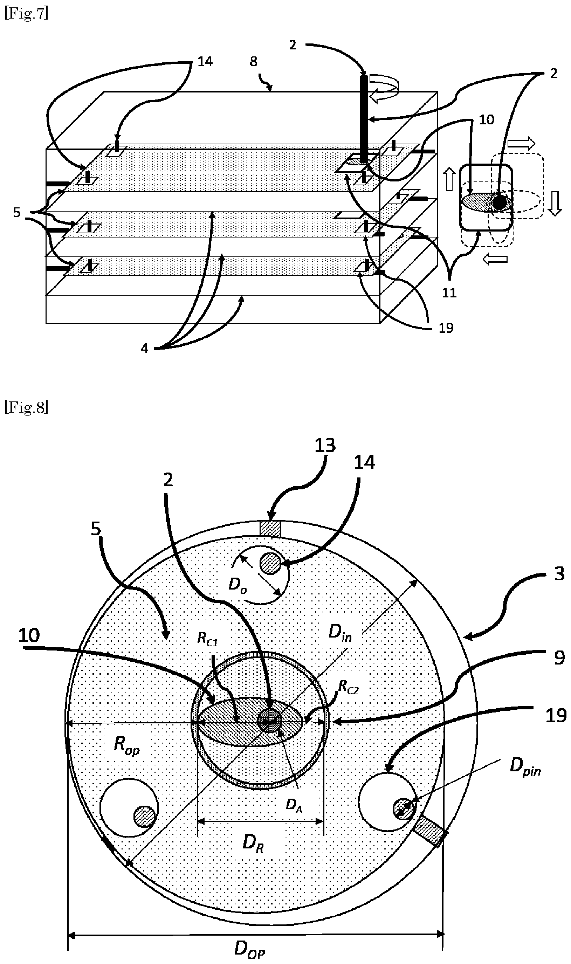

Next, the generating mechanism of the swinging motion inside this device is described. The motion mode used in the present invention is the swinging motion of the horizontal plate, in the case of a cylindrical device, the movement of the swinging plate is circular swinging motion. However, the present invention is not limited to apply to the cylindrical devices only. As shown in Figs. 6 and 7, in the case of the rectangular parallelepiped shape, it is also possible to make a rectangular swinging motion from similar mechanism. Furthermore, the rotating shaft transmitting the rotating motion to the swinging plate does not necessarily to be in the center of the device, it may be anywhere such as a corner in the device as shown in Fig 7. In the present invention, in the case of the swinging motion such as circular or a rectangular is used, those are generically referred as annular swinging motion.

In the rotating motion using in various reactors or powder processing devices, as mentioned above, the centrifugal force generated by rotation with same rotating axis is proportional to the radius of its position, therefore, the centrifugal forces acting to the powder depends on its position in the device. However, in this swinging mechanism, directions and velocities of the motion on the swinging plate are exactly the same at any position in the device and it is a big feature of this invention.

Fig. 8 describes the dimensions of elements and parts in a swinging plate required for the design of the swinging plate and the relationship among them.

Inner diameter $D_{in}$ of the device 3 in which swinging motion is enabled, diameter $D_{OP}$ of swinging plate 5, diameter $Do$ of hole 19 in which swinging motion is allowed, longer diameter $R_{C1}$ of eccentric cam 10, outer diameter $D_A$ of the center shaft 2, inner diameter $D_R$ of ring 9, the outer diameter $D_{pin}$ of the pin 14, and the difference $Gap$ between $D_{in}$ and $D_{OP}$ are shown. This $Gap$ is the width of swinging motion in which the swinging perforated plate 5 can move. Further, when the longer distance from the center of the rotating shaft to the inner wall of the ring 9 is $R_{C2}$, and the distance of opposite side is $E_{C1}$, the inner diameter $D_R$ of the ring 9 is expressed as Eq. (4).

[Eq. 4]

$$D_R = R_{C1} + R_{C2}$$

Next, since the radius of the device 3 is the sum of the distance $R_{OP}$, which is the distance from the inner surface of the ring to the outer diameter of the swinging plate, and $R_{C1}$, the diameter is twice of that and it is expressed as Eq. (5).

Further, the diameter $D_{OP}$ of the swinging perforated plate 5 is given by Eq. (6).

[Eq. 5]

$$D_{in} = 2(R_{OP} + R_{C1})$$

[Eq.6]

$$D_{OP} = (R_{OP} + R_{C1}) + (R_{OP} + R_{C2}) = 2R_{OP} + D_R$$

Here, from the difference between Eqs. (5) and (6), $Gap$ is expressed by Eq. (7). That is, when this circular plate swing, the difference between $R_{C1}$ and $R_{C2}$ is equal to $Gap$ and it is the diameter $D_O$ in which circular swinging is allowed.

[Eq.7]

$$D_{in} - D_{OP} = Gap = D_O = R_{C1} - R_{C2}$$

Here, when the hole 19 that allows swinging motion is used to convert the eccentric rotating motion of the swinging plate, and when the diameter of the pin 14 in this hole is $D_{pin}$, the diameter of the hole should increase by the diameter of this pin 14, so that the size of *Gap* should be add $D_{pin}$ like Eq. (8).

[Eq.8]

$$D_{pin} > 0, \qquad D_O = Gap + D_{pin}$$

The above equations indicate the relationship between the mechanism for generating the circular swinging in the cylindrical device and the sizes of parts for designing the swinging plate. The design of each dimension of the swinging perforated plates is possible by this relationship, but regarding the hole diameter $D_O$ for the swinging, the value obtained by the above relationship is the minimum value. In actual fabricating, it is preferable to be 1 to 2 mm larger to avoid interference as a margin.

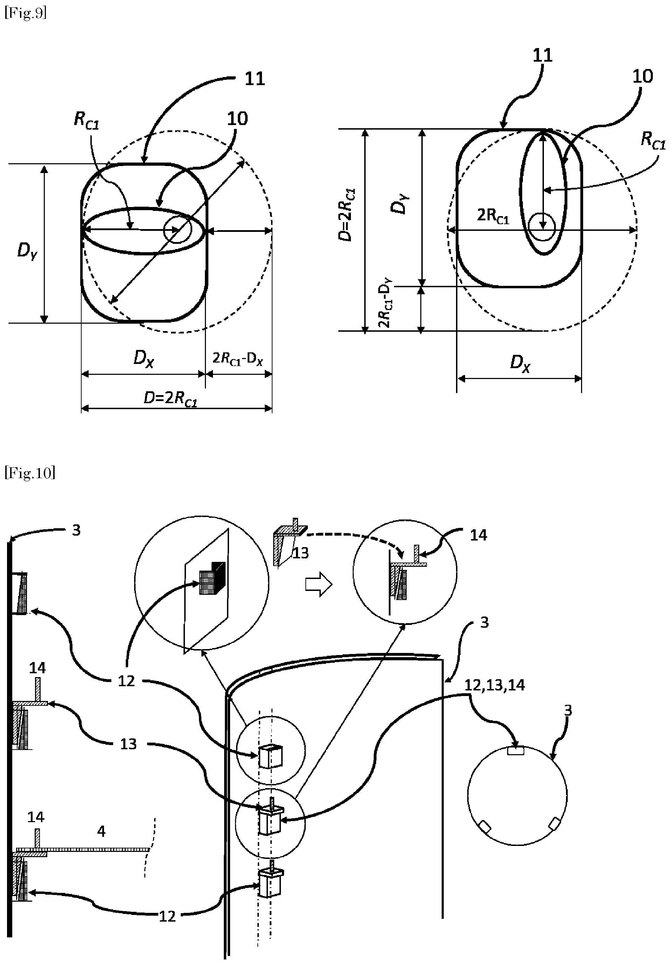

Regarding to the rectangular device, as shown in Fig. 9, the swinging distances of *X* and *Y* axes of the perforated plate are determined from the longer radius Rci of the eccentric cam 10 and inner diameters of a rectangular ring $D_X$ and $D_Y$ by Eqs. (9) and (10). Based on this relationship, it is preferable to add a margin of about 1 to 2 mm as the margin. Further, in the case of a rectangular shape, it is desirable that the pin14 preventing rotation should be installed at least all four corners from the viewpoint of balancing the movement of the swinging perforated plate.

[Eq.9]

$$\textbf{Traversing distance in X direction} = 2R_{C1} - D_X$$

[Eq.10]

$$\textbf{Traversing distance in Y direction} = 2R_{C1} - D_Y$$

Next, the specifications of the perforated plates (hole shape, hole diameter, aperture ratio) to be used and the determining method of the space between the swinging and static perforated plates will be explained. However, all of them depends on the properties of the powder used. So, to determine those values based on the understanding of its properties, the powder to be used should be used for testing. Here, only the outline will be described as a reference example.

Hole shape of perforated plate:
The using of a commercially available punching metal for the perforated plate is preferable. The commercially available punching metals have a variety of hole shapes such as round holes, long holes, specially shaped holes and so on. For using to the present invention, smooth passage of gas and powder is important, so for this purpose, elongated holes are unsuitable. The isotropic shape like a square hole such as a tetragonal shape or a hexagonal shape is preferable, but a round hole is simple and most preferable.

Aperture ratio:
In the commercially available punching metal having round hole, there are various hole arrangements such as 60 degree staggered, square staggered, and parallel type, and the value of these aperture ratios is calculated from the hole diameter, pitch, and these arrangement.

As a reference example, in the case of commercially available 60° zigzag round hole punching metals, when the hole diameter is the half of the pitch, the aperture ratio is calculated as 22.7%. In the case of 45° zigzag, it is 39.3%. Although any arrangements are available for this purpose, unless there is a special reason, the range of about 20 to 40%, which is popular, is preferable.

Determination method of the hole diameter:
The range of hole diameter of perforated plate made from the commercially available punching metal is generally $\Phi 3$ to 10mm, and it can be selected from these. Normally, in the case of powder having low cohesiveness and better fluidity, as an empirical rule, the hole diameter in which the powder can passes through without any plugging of the hole should be at least 3 times the maximum diameter in its particle size distribution. Therefore, it can be understood, when a commercially available perforated plate with hole diameter of $\Phi 10$ mm is used, it can be used for up to the powder having a maximum particle size of about 3 mm to pass through all particles.

When fine powder or powder that easily aggregates are used, the hole diameter of the perforated plates should be selected from the range of $\Phi 3$ to $\Phi 10$mm, based on the observation result of the passing of the powder actually used while the perforated plates is swinging.

The following method is a reference example for observing the passage of powder, but is not limited to this method only.

As a typical example of non-cohesive, so-called easily flowing powder, 100g of granulated sugar with an average particle size of about 0.5mm is placed on a punching metal with $\Phi 3$mm hole diameter, 22.7% aperture ratio and 300mm square. It swung horizontally at a horizontal swinging speed of about 5cm/s, and its passability was confirmed. The granulated sugar passed through the entire amount in a short time.

Next, 100g of slaked lime for gardening (average particle size 7.8$\mu$m) is placed on the same punching metal, and this was similarly swinging horizontally for 1 minute at a horizontal swinging speed of about 5cm/s to pass through it. After 1 minute past, about 1/5 amount of it did not pass and remained on the punching metal.

After this trial, when the punching metal was replaced another one having with the hole diameter of $\Phi 5$ mm and the aperture ratio of 22.7% and the same observation test was carried out using the same slaked lime powder, the entire amount of the powder passed through this punching metal. Its good passability was confirmed.

Therefore, although the particle size of granulated sugar is larger than that of slaked lime powder, the particles is not cohesive and have good fluidity, so that its passability is good, and the hole diameter of the 3mm punching metal is suitable for this sugar. However, although the average particle size of the slaked lime powder is as small as about 1/65 of the granulated sugar, the particles have high cohesiveness or adhesiveness and poor fluidity, so it was necessary to use a perforated plate with $\Phi 5$ mm holes. Such simple passability tests are desirable for the selection of the suitable punching metal.

Determining Method of the spacing $H$ of the perforated plates:
A reference example is also shown here, but the method is not limited to this method only.

Regarding the static perforated plate 4 and the swinging perforated plate 5, as it has already been described above,

1. The powder weight in the bed is shared with the plural plates, so its compaction is suppressed.
2. Shear stress due to horizontal swinging motion is given to the inside of the powder bed to suppress the occurrence of the drift.

These two functions are important.

First, the minimum value $H_{min}$ of the perforated plate spacing is simply determined as the minimum spacing that does not physically interfere during disassemble and assemble workings. The interfering factors in these workings depend on the size of parts, tools, and jigs used. In the following explanation, $H_{min}$ is determined as 20mm, but it is not limited to this, of course.

Next, in terms of the maximum value of the spacing $H_{max}$, the maximum height of the powder bed, where the compaction does not occur within this spacing, is $H_{max1}$. The maximum height, where the shear stress is obtained to prevent the drift due to the occurring of channeling, is $H_{max2}$. After compering of these two values, the smaller one should be the maximum tolerable height $H_{max}$. Here, $H_{max1}$ is determined by the confirmation of the height which the compaction of the powder to be used does not occur.

$H_{max2}$ is determined as the maximum height in which the generated the drift like channeling is extinct by horizontal swinging of the perforated plate installed in the powder bed, when the gas is aerated into the powder bed and the drift occurs.

Described above, this value should be determined by the observation using the powder to be used.

How to determine the perforated plate spacing $H$ in the scale-up design is described.

In the scale-up design, from the results of small-scale observation, the spacing should be determined so as to generate same shear stress. That is, it is necessary to determine so that the same velocity gradient is generated even after scaling-up. In this scale-up design, the shear stress in the powder bed between two plates is determined by the ratio of the moving speed of the swinging plate and the space between these two perforated plates. So, according to the similarity rule, this velocity gradient can be equalized by applying the same ratio.

The scale-up design method to equalize the shear stress has been described, but this shear stress can be adjusted by operating conditions even after the device has been made. As an example, the circular swing motion, in which the swing motion is a circular swing motion, is described.

When the plate is rotating $N$ per second, the swinging distance per second is $\pi D_O \times N$.

This is equal to the swinging motion velocity $U$, that is, $U = \pi D_O \times N$. At that time, the shear stress is expressed by Eq. (11). In this equation, $D_O$ and $H$ are the design factors of the device, but the rotation speed $N$ is the operating factor and can be arbitrarily adjusted during operation.

This means that when the properties of the powder to be handled is changed in the same device and increase in the possibility about the occurrence of the drift, the generated shear stress can be increased appropriately by increasing the rotation speed $N$.

[Eq.11]

$$\tau \propto \frac{\pi D_O N}{H}$$

The specifications of the perforated plate (hole diameter, pitch, aperture ratio, spacing between two perforated plates) mentioned above is summarized as follows.

1. For the hole shape, a circular or an isotropic polygon is preferable, and a circular shape is the most preferable.
2. The aperture ratio is preferable in the range of 20 to 40% when the hole diameter is the half of the pitch.
3. The hole diameter is selected within the range of $\Phi 3$ to 10mm, but the suitable value varies greatly depending on the powder properties, so it should be selected based on the observation results of the passage of the powder to be used as described above.
4. The spacing between two perforated plates is determined within this range by obtaining two observation results, the tolerable range from the measured values of the compaction and the reaching distance of the shear stress in the device as described above.

Next, the method of applying this swinging motion method when attempting to fluidize the fine powder in shelf-type multi-stage fluidized beds is described.

Here, the structure of the multi-stage fluidized bed to be applied is assumed to be a shelf-type multi-stage fluidized bed with down comers as described in Patent Document 3. Instead of the static perforated plate, a distribution plate using in a normal fluidized bed is adopted as the bottom plate of each stage.

Here, the drift occurs when the powder to be fluidized is a fine powder, then, uniform contact of the gas-solid becomes impossible, and the ratio of unreacted gas and the ratio of insufficiently processed powder increase at the outlet of the device. Therefore, by applying the swinging motion of the perforated plate in the powder bed, the powder on the stage is always shook horizontally, and the occurrence of this drift is prevented. As a result, a uniform flow state can be accomplished over the entire cross-sectional plane of the stage, and the processing efficiency of gas and powder can be improved.

Here, in the case of a fluidized bed, unlike packed beds and moving beds, the upper surface of the powder bed on the swinging plate is a vacant space, and the distribution plate is the static plate. Therefore, a shear stress is generated in the powder between the swinging plate and the distribution plate under the swinging plate, but this shear stress is not generated in the powder bed above the swinging plate. The whole powder above the swinging plate moves accompanied by the movement of the swinging plate. Therefore, in this case, the horizontal speed of the powder is made as zero by this a vertical partition plate extended to the upper surface of the powder bed. Thereby shear stress in the powder bed is generated and this shear stress breaks the channeling occurred.

The details of this vertical partition plate will be described in the example described later.

Consideration in the design of the swinging mechanism of the present invention:

In the present invention, the swinging mechanism is embedded in the powder bed of packed beds, moving beds and multi-stage fluidized beds.

Therefore, there is concerns that troubles such as wear due to direct contact with the powder, biting powder and powder sticking may be caused in this swinging mechanism. Therefore, in order to avoid the occurrence of such troubles and for the sake of easy disassembling and assembling at the maintenances of inspections and cleaning works, the structure and its parts should be simpler structures. The structure and parts for that purpose should reflect these considerations, and a wide variety of structures and parts can be devised. Here, the ways to support the perforated plate are shown the holding mechanisms of the swinging and static perforated plates in a cylindrical device as an example.

Holding methods of the swinging and the static perforated plates:
In Fig. 10, the required number of insertion parts 12 that can be fixed by inserting into supports 13 (three in Fig. 10) are attached with a predetermined pitch in the vertical direction to the inner wall of the vessel 3. These insertion ports 12 are similarly attached to three positions (0 degree, 120degree, 240degree) of the axial symmetry.

Here, it is preferable that the inner surfaces of the insertion ports 12 and the contact surface of the supports 13 are tapered at the same angle so that they can be easily attached and detached and with no gap after attached.

In addition, the bottom of the insertion port 12 should be open so that powder does not accumulate here and it is easy to clean.

A supporting part 13 having a vertically standing pin 14 is inserted into the insertion port 12 from above and fixed. This completes the attachment of the supporting parts 13.

Detachment is the reverse procedure and is extremely simple.

This supporting part 13 supports the static perforated plate 4, or supports the mechanism that converts the rotational motion of the swinging perforated plate 5.

Installation method of the static perforated plate:

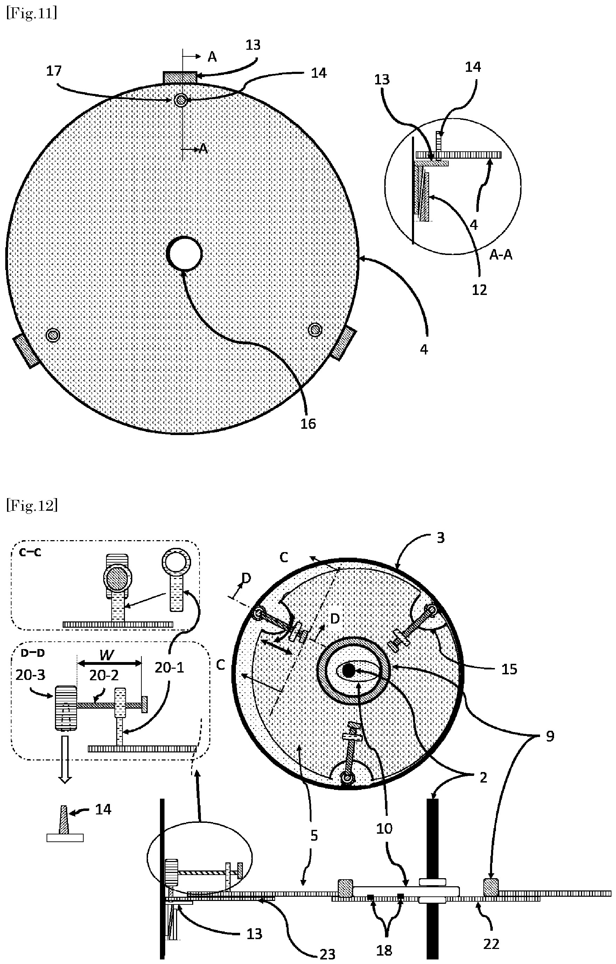

Fig. 11 shows an example of a setting method for a static perforated plate. The supporting part 13 with the pin 14 is inserted into the lowermost insertion port 12. The static perforated plate 4 has a pin hole 17 to prevent the rotation of the static perforated plate 4 by the pin 14. When the static perforated plate 4 is lowered to set on the support 13, the pin 14 should insert into this hole 17.

While passing the hole 16 of the static perforated plate 4 through the rotation shaft 2, the static plate is lowered to a predetermined height, and the static plate is set on the supports 13 by dropping the pin hole 17 through the pin 14. So, the static perforated plate 4 cannot be rotated by the pin 14.

When there are a plurality of static perforated plates, the swinging perforated plate 5 should be set in the next second stage, and the static perforated plate 4 should be set in the same manner in the third stage. As this manner, the static perforated plates 4 and the swinging perforated plates 5 are alternately set the required number of plates. Disassembling procedure is the reverse of this manner.

The above description is an example for a cylindrical device, but the procedure for the rectangular parallelepiped shape device is the same as shown in Figs. 6 and 7, but in order to support perforated plates stably, the support 13 should be equipped at four corners at least as shown in Fig. 7.

A wide variety of methods can be devised as the rotation restraint mechanism by connecting the inner wall of the vessel and the swinging perforated plate 5. The following three examples of the mechanisms are described as references to build well understanding of this mechanism, but of course, the restraining methods of the swinging motion is not limited to these three only.

1. As shown in Fig. 12, a method of suspending and holding a swinging perforated plate 5 by using an arm that can rotate in a horizontal plane with the fixing pin 14 as the center of its rotation.

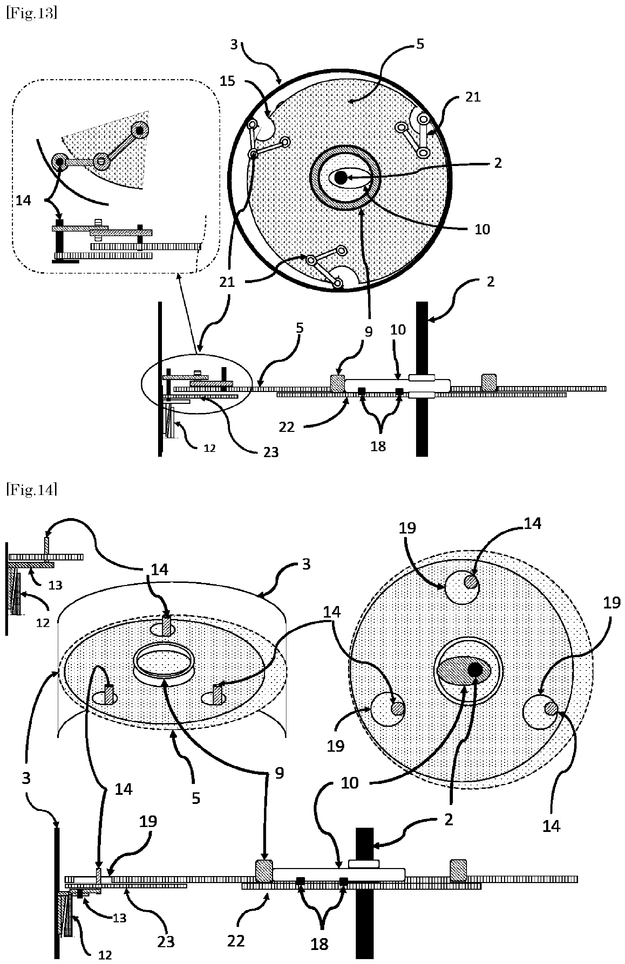

2. As shown in Fig. 13, a method of suspending and holding the swinging perforated plate 5 with a rotation restraining link having a joint that can bend horizontally at the middle position thereof.

3. As shown in Fig. 14, a hole having a swinging motion diameter in the swinging plate is passed through a vertical pin 14 on a support 13 protruding from the inner wall of the vessel, and the swinging motion within this range of the swinging hole is allowed. At the same time, the weight of the swinging perforated plate is supported by the support 13. By the methods described above, the swinging perforated plates are hold at the predetermined height and allowed the horizontal annular swinging motion.

Specific examples of these three holding methods are described below.

Holding Example of the swinging perforated plate 1:
In Fig.12, the eccentric cam 10 is fixed to the rotating shaft 2 at a predetermined height. A perforated plate 22 having a larger diameter than $2R_{ci}$ and the same specifications is connected to the rotating shaft 2 at the points 18 just below the eccentric cam 10. This perforated plate 22 supports the swinging perforated plate 5 from below.

Since the passage resistance of the gas and powder flows in the space other than the eccentric cam 10 in the ring 9 is less than that of the perforated plate, the purpose of this perforated plate 22 is to prevent the concentrating of gas and powder flows to this hole than other places and to equalize the passing through resistance everywhere of cross-sectional plane. Further, at the inner wall side, an annular static perforated plate 23 is installed for the same purpose.

As a mechanism for suspending and enabling the swinging motion of the swinging perforated plate 5, the rotation restraint mechanism 20 are installed at three positions. The mechanism 20 is consisted of part 20-1 which is the eyebolt-shaped having a ring, the arm 20-2 penetrating this ring portion, and the part 20-3 which is holding the arm 20-2 mounting on the support pin 14. Since the diameter of the arm 20-2 is smaller than the inner diameter of the ring of the component 20-1, it can freely reciprocate in the ring in the lateral direction of the arm 20-2. The end of the arm 20-2 close to the center of the vessel 3 is made larger than the inner diameter of the ring of the part 20-1 in order to prevent the arm 20-2 coming out from the part 20-1.

Further, the lower surface of the component 20-3 has the hole for the pin 14 to be inserted, and this is put on the pin 14 from above and set. The rotation restraint portion 20-3 can rotate about the pin 14. The holes in the pins 14 and parts 20-3 are tapered at the same angle for easy attachment and detachment.

That is, the part 20-1 mounted on the swinging perforated plate allows two-dimensional horizontal movement by the combined motion of the rotational motion around the pin 14 and the radial reciprocating motion that moves along the arm 20-2. Here, the distance $W$ at which the component 20-1 can move along the arm 20-2 should be the length obtained by adding 1 to 2 mm as a margin width to the $Gap$ or the swinging diameter $D_O$ shown in Fig. 8 described above. Here, semicircular cutouts 15 with a radius of $(DO + D_{pin})/2$ are required at three positions in Fig. 12 so that the peripheral portion of the swinging perforated plate 5 does not contact with the pins 14 of the supporting parts 13 during swinging.

Holding Example of the swinging perforated plate 2:
Fig. 13 is the same as the holding example 1, but as the rotation restraint mechanism, a rotation restraint link 21 having a joint that can be bent in the middle position instead of the rotatable arm 20 is used. At this time, the length of the link 21 when the joint was fully extended should be 1 to 2mm longer than a size of the $Gap$ in order to allow a margin in the swinging motion range of the swinging perforated plate 5.

The cutout 15 of the swinging perforated plate 5 is the same as that of the holding example 1. As a result, the swinging perforated plate 5 can swing as in the supporting example 1.

Holding Example of the swinging perforated plate 3:
Fig. 14 shows the holding example 3. The method of installing the rotating shaft 2 and the swinging perforated plate 5 is the same as that of the holding examples 1 and 2.

The rotation restraint mechanism of the swinging perforated plate 5 is described in Fig. 4. The rotation restraint pins 14 are protruded by swinging diameter $D_O$ from support 13 to the center side and by passing this through the hole 19 of the diameter $D_O$ for rotation restraint, the rotational motion of the swinging perforated plate 5 is converted to circular swinging motion and the circular swinging motion in the range of the diameter $D_O$ is allowed.

Although the above three holding examples are shown, a variety of the mechanisms for swinging the horizontal perforated plate can be devised other than above three cases. In any mechanism, the swinging motion is accomplished by combination of the two mechanisms that generates an eccentric rotation and converts the eccentric rotation to the swinging motion by restraint the rotation. In addition, since this mechanism is embedded in the powder bed, it is important that troubles such as powder biting and sticking are not to occur in the gaps and sliding parts of the mechanism, easy assembling, disassembling and cleaning of those parts.

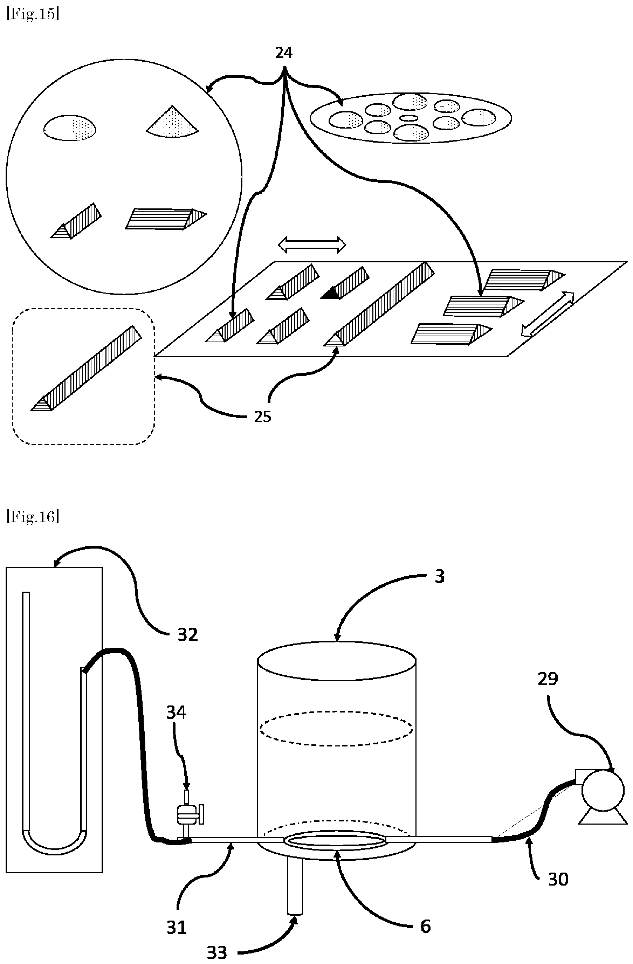

As an advanced type of the present invention, when the shear stress caused by the swinging motion should be increased to strengthen the crushing function, or when the shear stress is hard to transmit sufficiently to the entire powder and cause slippage by low friction, it is preferable to attach the protrusions 24 as shown in Fig. 15 above, below, or above and below the plates in the powder bed. In Fig. 15, a conical, hemispherical, and triangular columnar shape as examples of the protrusions are shown, any of them may be adopted.


[Example]

Fig. 16 shows the schematic diagram of the observation device using the present invention. A ring-shaped-tube 6 having a large number of air spouting holes facing downward is installed at the bottom of the cylindrical vessel 3 as an air supply tube and a predetermined amount of air is supplied through the air supply tube 30 from the air supply blower 29. The pressure of this air is measured by the water column manometer 32 connected to the pressure measuring tube 31. Further, the amount of air supplied is controlled by adjusting the opening degree of the adjusting valve 34.

The observation device 3 incorporating the swinging mechanism of the holding example

1 is made of a cylindrical transparent polycarbonate and has a diameter of 220mm and a height of 220mm. As shown in Fig.5, a circular swinging perforated plate cut out from the punching metal EA952B-205 made by ESCO Co, Ltd. (hole diameter $\Phi$5mm, pitch 10mm and aperture ratio 22.7%) is installed at 30mm from its bottom. And, a similar circular static perforated plate 30mm is installed above it. These two were one pair and two pairs of them were installed at same interval in the vertical direction and a swinging plate was added at the top. The air from the blower 29 is spouted downward from 10 spouting holes of $\Phi$1.5mm diameter at equal intervals of the ring-shaped tube 6 which is set at the height of about 3mm from the bottom of the vessel. A powder discharging port 30 having a diameter of 22mm is attached on the bottom.

Here, 30mm pitch between two perforated plates was adopted based on the result that when the spacing was 30mm, the shear stress due to the horizontal swinging motion of the swinging perforated plate was sufficiently transmitted to the entire powder within this spacing. This was measured by the determination method of $H_{max}$ in advance. At this time, the swinging width $D_O$ (= *Gap*) was 20mm, and the swinging cycle was 5 seconds. The powder used in this observation was a fine powder of slaked lime for gardening (average particle size 7.8μm).

Here, the pore diameter of the perforated plate was set to Φ5mm based on the result of the passability examination shown in the example above.

After closing the discharging port 33 of the bottom, 2200g of this powder was charged little by little from the top of the device in 10 minutes, and the powder bed height after charging completed was about 150 mm. That is, the uppermost swinging plate swung just above the upper surface of the powder bed.

From the volume of this powder bed, the average bulk density of this powder bed was calculated as 386kg/m3 and the porosity ε was calculated as 82% from a true density of 2200kg/m3 of the powder. In this vessel, the height of the powder bed between these perforated plates is 30mm after the powder charging. Since the powder surface between the perforated plates was expected to settle after left for about 10 minutes, the settling down of powder top surface, that is the progress of powder compaction was observed. But no visual change was observed. So, it is understood that the compaction of the powder has not progressed during this period.

Here, as a reference value, when the degree of influence of this porosity on the pressure drop, $(1-\varepsilon)^2/\varepsilon^3$, was calculated from Eq. (2) using the porosity 82%, the calculated value is quite small 0.06 (= 1/16). This shows that the pressure drop of the powder bed could be significantly reduced by maintaining the state of no compaction.

By releasing a part of the supplying air through adjustment valve 34 to the outside of the device, the flow rate into the device was adjusted to 50L/min (average superficial velocity is 22mm/s).

Observation 1, Prevention of powder compaction:

First, before the powder was charged, air was supplied from the ring-shaped tube 6 and the pressure difference between the device inlet and outlet at that time was measured with a differential pressure gauge (water column manometer) 32. The measured value was 390mm water column. This was mainly the pressure drop of the ring-shaped tube. Next, when 2200g of slaked lime powder was charged and the powder bed height reached about 150mm, air supply was started from the ring-shaped tube 6 under stopping of the swinging perforated plate, and the pressure drop was measured. The water column was 400mm, and the increased difference of 10mm was caused by the pressure drop of the air passing through the powder bed, which was an extremely small value for packed beds of fine powder. The validity of this pressure drop was verified as follows by comparing the pressure drop calculated at the fluidizing state as a reference value, although the superficial velocity of the gas in this experiment was less than the minimum fluidizing velocity of the powder.

When the velocity of the aerated gas is greater than the minimum fluidization velocity and the entire powder is completely fluidized (ie, suspended), the multiplied value of the pressure drop and cross-sectional area of the gas passing through the fluidized bed should be equal to the powder weight of 2200g. That is, since the divided value of the powder weight by the cross-sectional area is the pressure drop of the passing gas, the calculation result is as shown in Eq. (12), and the water column should increase 58 mm. However, since the gas flow velocity is lower than the minimum fluidization velocity here, the particles were not suspended and a part of the powder weight is loaded to the perforated plate in the powder bed, therefore this value should be lower than the calculated value.

[Eq.12]

$$2200 \div \frac{\pi D^2}{4} = 2200 \div \pi(22)^2/4 = 5.8 \text{g/cm}^2 \implies 58\text{mm Water Column}$$

Next, since the aperture ratio of the perforated plate used in this observation was about 23%, when the powder weight was assumed to be loaded on the perforated plate vertically, it was considered that the perforated plate was supporting about 77% of the powder weight. That is, since the gas flow supports the rest of the weight, the measured pressure drop was expected to be $58 \times 0.23 = 13$ mm water column.

However, the measured value was a 10 mm water column. From this pressure difference, it can be considered that the ratio of the loaded weight to the perforated plate was actually 1- (10/58) = 0.83, that is, about 83% of the powder weight was supported by the perforated plate. The difference of this 3mm water column was that this powder has poor fluidity, so the powder surrounding the hole was supported a part of the powder weight just above the hole, that is, the weight of 83%, which was larger than the 77%, was supported by the perforated plate. From this result, it can be seen that by installing a plural-perforated plates, the powder weight in the bed was supported by the plural perforated plates and by sharing the weight. As the result, the compaction was prevented.

Observation 2, occurring of the drift by channeling

The air supply was started at the state in which the swinging perforated plate was stationary, then it was observed for a while, two spouts were generated on the upper surface of the powder bed, and air and a small amount of powder were spurt from these spouts. That is, the generation of channeling was observed. The differential pressure between the inlet pressure and atmospheric pressure at this time was the same as the result of observation experiment 1 and was a 400mm water column, and no significant change could be read. If the channeling occurs, the value of the pressure drop of the passing gas should decrease, but in this experiment, most of the powder weight was supported by plural perforated plates, so the passing pressure drop of the gas was quite reduced. By this reduced pressure drop, the amount of decrease in pressure drop due to channeling occurrence became tiny, and this tiny difference of the water column manometer 32 could not be read by its low reading accuracy.

Observation 3, Elimination of occurred channeling

After the above observation, when the motor 1 was started to rotate the rotating shaft 2 and the swinging perforated plate was driven to swing the circular motion, the internal powder was dragged in the horizontal direction due to this swinging motion of the perforated plate. And, it was observed that the spouts on the upper surface of the powder bed disappeared immediately, and the unevenness on the upper surface of the powder bed formed at the time of powder charging was flattened. That is, by this horizontal motion and flattening of the powder bed, the channeling on the powder bed was eliminated. Then, the bulk density of the powder bed can be regarded as homogenized. At this time, the total pressure drop was still about 400mm and the powder bed differential pressure was 10mm, and no significant change was observed.

At this time, when the movement of the powder on the upper surface of the powder bed was observed, no vertical circulation flow was generated, and only the horizontal swinging motion following the movement of the swinging perforated plate was observed. Here, when the swinging plate was approaching the wall side due to the horizontal swinging motion, the powder bed on the swinging plate was pushed toward the wall side, so that the powder height near the wall became higher about 3 to 4mm. Such swelling phenomenon was observed. This swelling appeared as if the "waviness" of the powder bed was orbiting the wall as following the circular swinging of the plate. It means that the height of the powder bed was not completely flat, but it was a periodic motion, and the powder bed was uniform over the entire surface from the view point of time average. From the above results, in the packed bed and the moving bed in which plural swinging perforated plates were installed, even when the powder bed thickness was increased, the powder weight in the device was shared with the plural perforated plates, so the powder compaction did not occur. It was also confirmed that the increase in pressure drop of the gas passing through the powder bed was prevented by no occurrence of the compaction, and at the same time, the occurrence of channeling was prevented as well.

Observation 4, Verification of the plug-flow property of the powder in the moving bed Next, the upper surface of the powder during the swinging of the perforated plate was flattened by this swinging, and became a substantially horizontal surface like the liquid. After observing this flattened state, the discharging of the powder from the powder discharging section 33 at the bottom was started. That is, it means the transition from the packed bed state to the moving bed state. At the same time, the charging of the raw material powder to the upper surface of the powder bed was stopped, and the state of sinking of the upper surface of the powder was observed.

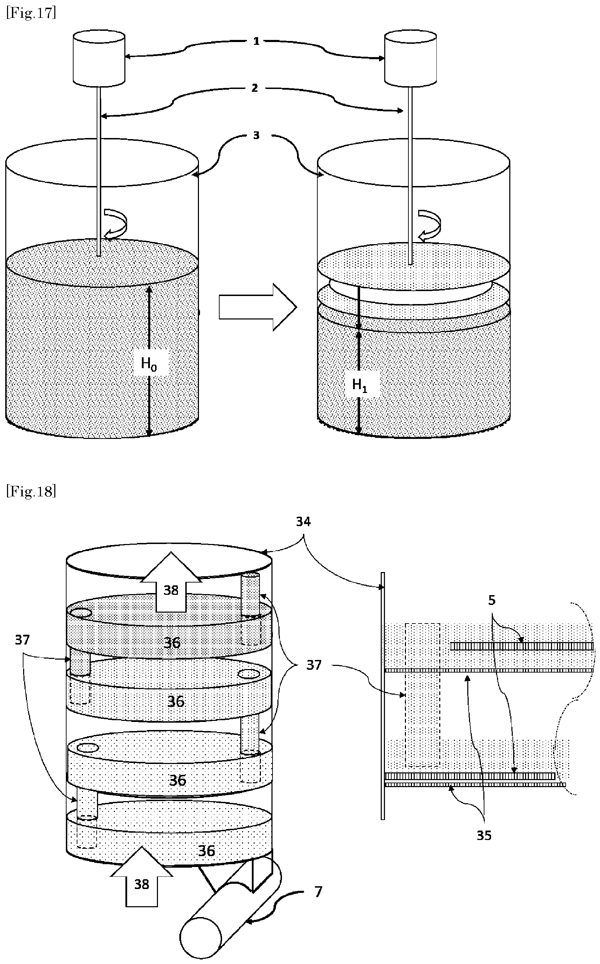

As shown in Fig. 17, as expected, the upper surface of the powder gradually sank while maintaining the horizontal surface, passed through the swinging perforated plate downward, while maintaining the horizontal surface, further the static perforated plate underneath also passed through in the same way. From this fact, the entire powder in this moving bed sank uniformly.

The inside of the powder bed cannot be observed from the outside, but the powder near the swinging plate seemed to be pushed up and pushed away during traversing of the swinging plate. So, there must be a slight movement in that part. It seemed that a slight mixing of the powder was occurring, and although it was not a perfect plug-flow, it was considered that the powder flow in this device was close to the plug-flow.

Observation 5, Observation of powder movement and gas passage in the multi-stage fluidized bed

The fluidized bed is well known as a complete mixing device and is widely used. However, the higher volumetric efficiency of the moving bed than that of the fluidized bed was described by Eq. (1). It is known that when plural stirred tank reactors are connected in a cascade which is called as continuous stirred tank reactor (CSTR), its mixing characteristics closes to the plug-flow from complete mixing. Similar to this, when plural fluidized bed are connected in a cascade, that means the multi-stage fluidized bed, its mixing characteristics also closes to the plug-flow from complete mixing even the mixing characteristic in each stage of the fluidized bed is complete mixing, because the back mixing of the powder between the fluidized beds placed side by side cannot occur.

That is, the mixing characteristic of multi-stage fluidized bed approaches the plug-flow like moving beds. Therefore, multi-stage fluidized beds was made as an experimental device to observe its plug-flow property.

Multi-stage fluidized beds 34 as shown in Fig. 18 was made using a transparent acrylic cylinder having an outer diameter of 150mm and an inner diameter of 144mm. The bottom plate of each stage is a distribution plate 35, and holes of 1.5mm were arranged in a staggered arrangement and at 8mm pitch.

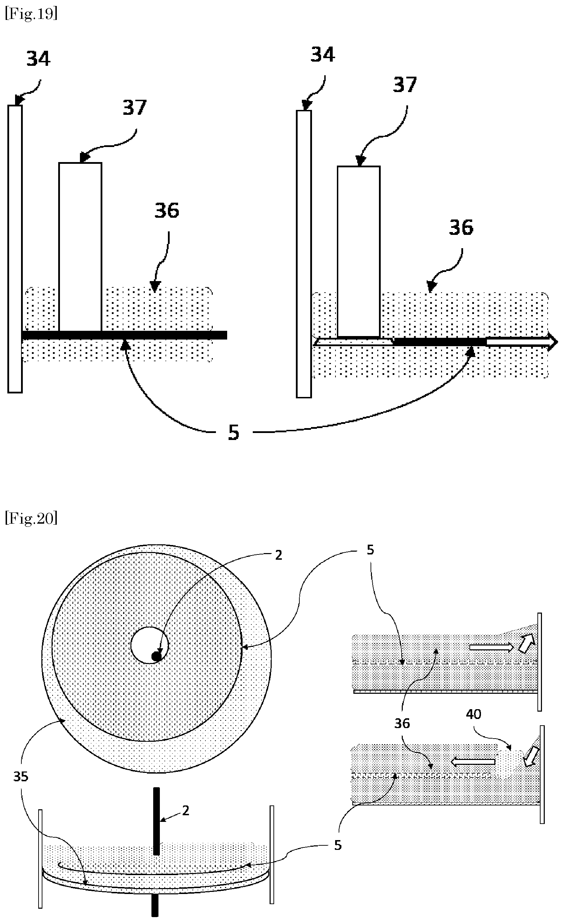

The down comer 37 was a transparent acrylic pipe having an outer diameter of 10mm and an inner diameter of 8mm, and was placed at a height of 10mm above the distribution plate so that the powder overflows to enter the down comer 37. The lower end of the down comer was hold at a height of about 2 mm upper from the distribution plate so that a swinging plate with 1mm thickness can slide in and out under this. As shown in the left Figure of Fig. 19, while the swinging plate slide in under this, the powder in the down comer cannot flow down. But when the down comer slide out from there as shown in the right Figure of Fig. 19, the powder inside the down comer 37 flows down and flowed out into the fluidizing powder. By repeating this, the powder in the upper stage quantitatively moves to the lower stage. At the bottom of this device, the powder in the lowermost stage and in the down comer, was dropped onto the discharging screw to discharge.

The height of the swinging plate 5 of each stage was hold at a position of about 1 mm upward from the dispersion plate 35. That is, the thickness of the powder bed on the swinging plate was about 9mm.

Two types of powder were used in this observation. First, unexpanded styrene beads (representative diameter 0.3 mm, maximum diameter 1 mm) with good fluidity were used so that the movement of particles can be easily seen. After charging appropriate amount particles to all stages, drove the swinging plate, and after confirming that the powder bed of each stage was leveled by the movement of the swinging plate and all surfaces were flattened, air flow 38 was supplied from the bottom of this device. It was confirmed that the powders in all stages were uniformly fluidizing state over the entire cross-sectional surface.

Next, maintaining this fluidization, when the powder was quantitatively charged into the top stage of the device, overflow of the powder to the down comer was begun in the uppermost stage, which overflowing of the powder sequentially occurred from upper to lower stages. That is, it was confirmed the powder were moving from the upper stage to the lower stage in sequence.

Since powder accumulation on the discharging screw 7 was begun, the discharge screw was activated and the discharging was begun. As mentioned above, it was found that a stable multi-stage fluidized bed could be established.

Next, in order to observe the diffusion state of the particles in the fluidized bed 36 of each stage, charging of the colored styrene beads instead of the white beads was begun into this stable fluidized bed.

When observing inside of the multi-staged fluidized bed from above of the device, it was observed that the colored particles gradually moved from the particle charging section on the right end to the down comer on the left side while being mixed with the white particles. In Fig. 18, this situation is shown by the ratio of white/black in each stage. The black color means the colored particles. The ratio of white/black in the upper stage was darker, and as it went down to the lower stage, it gradually becomes lighter.

That is, the powder in each stage of the multi-staged fluidized bed was mixed and moved so as to diffuse horizontally, and after reaching the down comer at the opposite side, flowed down to the lower stage through this down comer.

Although the behavior of the powder in each stage was a fluidized bed, it was shown that the movement and mixing characteristics of the powder closed to those of moving bed as expected by increasing the number of stages.


Observation 6

Next, the powder was changed from styrene beads to the slaked lime powder, which is a fine powder, and the same observation was performed. At this time, in the case of the slaked lime powder, the powder adheres to the inner wall, then the inside cannot be observed from outside. Therefore, a single-stage fluidized bed was made instead of multi-stage fluidized bed so that the inside powder behavior was visually observed from above. First, the observation was started with about 2 mm thickness of the powder bed on the swinging plate. The swinging plate 5 was moved, then the air flow was started. When the air flow velocity was set higher than the minimum fluidization velocity, the air was uniformly spurt up from all the holes of the swinging perforated plate together with the slaked lime powder, it looked like white smoke was rising. This showed that the air was uniformly dispersed and passed through the powder bed. After that, the air flow velocity was lowered so that the slaked lime powder did not spurt up, and the situation was observed for a while, but since the swinging perforated plate was moving, the localization of the air flow to a part was not occurred. In addition, since the thickness of the powder bed on the swinging plate was thin, no "waviness" that occurs near the wall was observed. Next, slaked lime powder was additionally charged, and the height of the powder bed was increased by about 10mm, then, the state of the powder bed was observed. The charged powder was immediately leveled by the motion of the swinging plate, and the upper surface was flattened, but the "waviness" became noticeable due to the increased bed's height. And at the opposite side of this "waviness" near the wall, the trenches and channels in the powder bed were generated. So, air was spurted at these channels, but those positions were circularly orbiting according with the movements of the swinging plate and "waviness".

Observing the powder movement, as shown in Fig. 20, when the swinging plate approaches the wall, the powder was pushed toward the wall, so that the powder near the wall was pushed up and made steep powder lump like mountain-shape attached the wall. However, inversely when the swinging plate moved away, the powder moved away from the wall together with the swinging plate, but a part of the steep shaped powder lump was still remained because of its stickiness. A part of this steep powder lump collapsed and filled the trench, but as a whole, the powder trench 40 was kept near the wall. Naturally, the pressure drop of the air flow passing through this trench became low, so the air flow was concentrated here.

In the case of using good fluidity powder, the steep lump powder immediately collapses and fills in this trench, so no significant concentration of air flow occurs, but in the case of this slaked lime fine powder, because of its poor the fluidity, the generated trench did not filled immediately and the circulating channeling was generated.

The root cause of this problem was that the upper part of the powder bed was open and the static plate 4 has not installed there, so that the shear stress did not generate in the powder bed on the swinging plate. So, this phenomenon dues to that the powder bed moved as a mass.

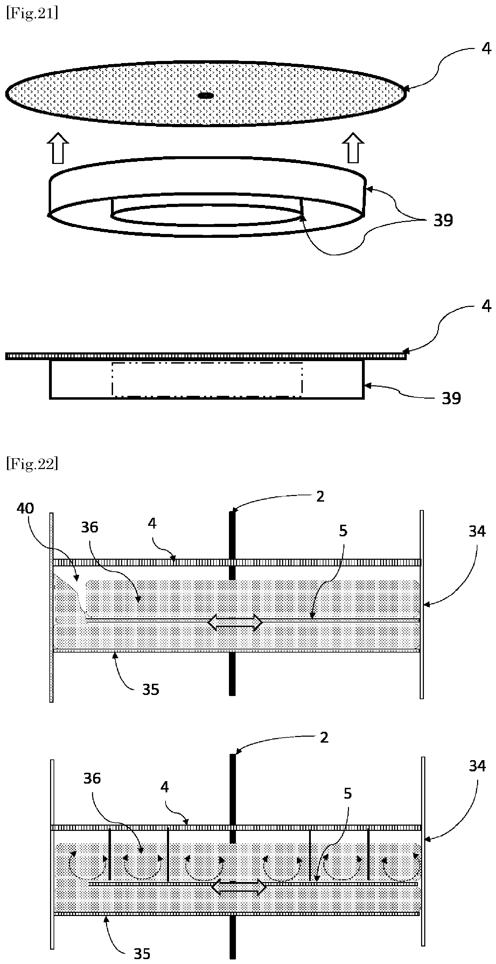

Therefore, in order to generate shear stress in the powder bed above the swinging plate, a vertical partition plates 39 reaching the inside of the powder bed were attached as shown in Fig. 21. After that, the same observation was performed, the upper Figure of Fig. 22 shows the schematic image before attaching the vertical partition plates, and the lower Figure of Fig. 22 shows the schematic image after attaching the plates.

Before attaching the partition plates in the upper Figure of Fig. 22, the powder was pushed toward the wall to raise it, and when the swinging plate moved away, the trench 40 of the powder was generated. But after the partition plates 39 attached, the trench 40 did not generated and the generation of channelings here were suppressed. Namely, this phenomenon was completely suppressed.

That is, since the upper surface of the powder bed was opened when the partition plates were not attached, the velocity gradient and the shear stress were not generated in the powder bed. In such case, in order to restrain the horizontal movement of the powder of the upper surface of the powder bed, the partition plate was reached the inside of the powder bed from the upper static plate. As the result, it was enabled to suppress or minimize the occurrence of the trenches, and it was enabled to accomplish a uniform movement of the entire powder. That is, it was possible to accomplish uniform air-solid contact.

Here, a vertical partition plate like striped-shape can be was used, of course other types of vertical plates are possible.

In the case of the multi-stage fluidized bed using such fine powder, when the fine powder enters and fulfills the inside of the down comer, the bulk density of the inside powder was low because it contains gas, therefore the downward powder pressure in the down comer becomes lower. As a result, the gas flow concentrates into the down comer, pushes the fine powder away, then the fine powder was spurt up. That is, the down comer becomes dysfunctional.

Therefore, in order to establish quantitative powder flow in the down comer, as the methods to shut the gas flow into the down comer, a double damper or a rotary valve and so on are effective.

[Industrial applicability]

So far, when the fine powder in the Geldart's "C" region which easily occur the drift was used for packed beds, moving beds and multi-stage fluidized beds, the present invention provides the method and the device which provides the uniform gas-powder contact. Even when the powder in the "A", "B", and "D" regions of Geldart and having strong cohesiveness or adhesiveness and easy occurring of the drift, such powders can be used for packed beds and the moving beds and fluidized beds by incorporating this swinging mechanism. This technology can be applied to the following applications.

Promotion of heat transfer in indirect heating and cooling of powder

In the indirect heating or indirect cooling method, the powder inside the device is heated or cooled from the device wall, or by embedded heat transfer tubes in the powder bed. The powder in the conventional packed beds is in a quiescence state, and the powder in the moving bed descends in the vertical direction, but there is no lateral movement, so its heat transfer coefficient is significantly inferior to the case in which the powder moves violently.

However, in the present invention, the powder in packed beds and moving beds follows the movement of the swinging plate and moves in the horizontal direction, so that the heat transfer coefficient in the device incorporated the present invention does not reach that in the fluidized bed. But, by the improvement of heat transfer coefficient due to moving and replacing the powder in contact with heat transfer wall, which is similar to the surface renewal of fluid, makes larger its heat transfer coefficient than conventional packed beds and moving beds. Further, it is possible to further promote heat transfer by increasing the rotation speed of the rotating shaft 2 and increasing the swinging motion speed.

Direct heating or cooling of powder by gas flow

By directly supplying high temperature air or liquid, cold air or refrigerant from the lower part of the device into the powder bed, heat transferring by the direct contact method is possible. In this case, since uniform contact with the powder is possible, particularly by establishing uniform contact of the fine powder having a large specific surface area and fluids, high heat transfer efficiency can be obtained in heat transfer between fluids and powders.

Moving bed for gas-solid reaction using fine powder or powder that easy aggregating and compacting

In general, When fine powder, which easily tend to aggregate or compact, are used for packed beds, moving beds, and multi-stage fluidized beds, uniform gas-powder contact using such fine powder cannot accomplish due to occurrence of the drift. So, uniform gas- powder contact enables to accomplish by applying the swinging mechanism of the present invention to them. In addition to this accomplished uniform gas-powder contact, the device with high volume efficiency can be obtained. In such case, besides of accomplishment of higher volumetric efficiency, the problems of locally acceleration of reactions and the generating of heat spots by the drift can be avoided.
Furthermore, in the case of moving beds or multi-stage fluidized beds, the short-passing of a raw material powder in the device can be prevented. That is, a reactor having high efficiency in both volumetric efficiency and quality can be obtained.
As a specific applying example, among various inorganic heat storage agents, the possibility of utilizing of calcium-based heat storage agents is shown.
The powder of calcium hydroxide Ca(OH)2 as a heat storage agent, is converted to calcium oxide (CaO) by a dehydration reaction when a high-temperature gas is aerated into the powder and contact with the powder of the agent. At this time, heat energy as reaction heat is absorbed into the agent and stored in it.
Next, in order to recover this stored heat, calcium oxide can be returned to calcium hydroxide by a hydration reaction due to contacting with water like an injection of water or an aeration of steam. At this time, since heat is generated from the agent because of exothermic reaction, the stored heat energy in the dehydration reaction can be recovered. Therefore, the inorganic heat storage agent is expected as a heat storage agent having a large heat storage capacity.
However, in this reaction, calcium hydroxide and calcium oxide are solids, and if the particle size were large, this reaction could not proceed to the inside of the particles, so that the reaction of whole particle becomes to be difficult. In the case of such a reaction between gases and solids, a fine powder having a small particle size is preferable to obtain high solid utilization ratio. However, in the case of using the fine powder, another issue, it is difficult to handle the fine powder with conventional devices, and it is impossible to enable uniform contact with the aerated gas. It may be considered as one of the reasons why the heat storage system using these inorganic heat storage agents has not been fully utilized until today.
The device applying the present invention is considered to be useful for directly using such a fine powder of the inorganic heat storage agent to obtain a high solid utilization ratio (reaction ratio).

Shelf-type multi-stage fluidized bed using fine powder or powder that easily aggregating or compacting

So far, various types of shelf-type multi-stage fluidized beds have been devised as in Patent Document 3, and although they are fluidized beds, they are used as moving beds because the contact between fluids and particles in them is countercurrent.
However, all of them are limited in "A" particles of Geldart's classification which are easily fluidized. And, the fine particles are impossible to use because the fine powder consisted of the fine particles easily generate the drift in this multi-stage fluidized bed. Further, since all kinetic energy for fluidizing the powder is given by only the flow of the fluid, so that the flow velocity in the operating condition must always be larger than the minimum fluidizing velocity.
On the other hand, in the method using the swinging mechanism of the present invention, even in the device using of the fine powders that tend to generate the drift, the swinging motion can prevent the occurrence of the drift. Thereby uniform gas-solid contact is enabled.
In addition, as an operation condition, even when the gas flow velocity is lower than the minimum fluidizing velocity, the kinetic energy of the powder is given from the motion of the swinging plate as well. Thereby a particle motion state similar to that of the fluidized bed can be accomplished. That is, the restriction in which the gas flow velocity should be higher than the minimum fluidizing velocity is eliminated. Particularly, under conditions where the reaction rate is slow, the flow velocity of the aerated reaction gas should be lowered. Since the gas flow velocity is lower than the minimum fluidizing velocity, and moving beds are used for this case.
For example, in the case of powder that easily aggregates, when the particles aggregate during operation and the apparent particle size becomes larger, that portion cannot fluidize, then uniform contact of gas-solid is impossible. However, in this swinging-type multi-stage fluidized bed, even in such case, since the agglomerates are broken down by the swinging motion in the powder bed, it is possible to operate, so that stable operation is accomplished even when such a powder is used. Further, in the reactor, when the contact efficiency between the gas and the fine particles, which are reaction solids or catalyst particles, should be increased, or when the heat transfer coefficient of an exothermic reaction or of an endothermic reaction should be increased, and when the motility of the particles should be increased, in those cases, it is preferable to use multi- stage fluidized beds incorporated the swinging mechanism.

[Explanation of code]

1 Motor
2 Rotating shaft
3 Cylindrical vessel
4 Static perforated plate
5 Swinging perforated plate
6 Ring-shaped tube (for air distributing)
7 Discharging mechanism (screw, etc.)
8 Rectangular parallelepiped vessel
9 Hole for the eccentric cam and the circular ring in contact with the cam
10 Eccentric cam
11 Hole for rectangular swinging and rectangular ring contacting with the cam
12 Insertion port
13 Support
14 Pin on the support
15 Cut out
16 Hole which the rotation shaft passes through
17 Pin hole for restraint
18 Welding point
19 Hole for converting rotational motion into swinging motion
20 Rotation conversion mechanism (arm that can rotate laterally and ring for hanging)
21 Link for converting the rotating motion
22 Rotating perforated plate
23 Circular static perforated plate
24 Various protrusions on the perforated plate
25 Reinforcing ribs on the perforated plate
26 Perforated plate that rotates by the rotating shaft
27 Perforated plate that can rotate following the rotation of the powder
28 Rod that restraints the rotation of the rotatable perforated plate 26
29 Blower for air supply
30 Air supply tube
31 Tube for pressure measurement
32 Water column manometer
33 Powder discharging tube
34 Multi-stage fluidized bed
35 Distributing plate
36 Powder bed or fluidized bed
37 Down comer
38 Fluidizing gas
39 Vertical partition plate
40 Trench of powder bed

Claims

1. In the powder beds of packed beds, moving beds, or multi-stage fluidized beds, the pore size and the aperture ratio which are not obstructed the vertical flow of gas and powder and the swinging perforated plate which move the circular swinging motion only the horizontal direction and the static perforated plate which does not obstructed the vertical flow of gas is fixed at a constant interval in the vertical direction are provided, and one or plural pairs of these are stacked and installed in this powder bed, then by swinging this swinging perforated plate horizontally, the shear stress of the horizontal direction in the powder bed is generated, whereby the bulk density of the entire powder bed is averaged, furthermore the drift occurring in the powder bed is prevented, as the result, the powder processing devices enable uniform contact between the supplying gas and the powder in it.

2. In addition to averaging the bulk density by the swinging perforated plate and the static perforated plate described before, the perforated plate described before supports the powder weight thereon, thereby preventing the loading of the entire powder weight on the bottom of the device from being concentrated, thereby the compaction of the powder at the bottom of the device is prevented, furthermore in the powder processing devices according to claim 1 the increasing of gas passage resistance due to the compaction is suppressed.

3. As the mechanism for generating the rocking motion according to claim 1, there is an eccentric cam that rotates in a horizontal plane with the rotation of a vertical rotating shaft, and a ring inscribed in the long end of the eccentric cam is installed on a perforated plate with a diameter smaller than the inner diameter of the vessel by the swinging motion width, with the same center of the plate, then the ring is pushed and rotated by rotating of the eccentric cam, the swinging perforated plate is about to be eccentrically rotation on the horizontal plane, on the other hand, by restraining mechanism installed at least at three or more axisymmetric positions on the inner wall of the vessel, the powder processing devices according to claim 1, having the mechanism for converting the rotating motion of the eccentric cam into an annular swing motion within a predetermined range.

4. As a mechanism for restraining the rotation of the swinging perforated plate according to claim 3, a method of suspending and holding the swinging perforated plate using an arm that rotates in a horizontal plane with a fixed pin as the center of rotation, or a method of suspending and holding the swinging perforated plate with the rotation restraining link having a joint that can be bent horizontally at an intermediate portion, or a supporting method of the weight of the swinging perforated plate by the supporting parts whose hole with a diameter of swinging motion provided in the swinging plate is passed through a vertical pin on the support part protruding from the inner wall of the vessel and the swinging motion within the range of this swinging hole is allowed, by described above methods, the powder processing devices according to claim 1, wherein the swinging perforated plates are held at a predetermined height and the mechanism enabling horizontal annular swing motion is used.

5. In the multi-stage fluidized bed in which the swinging perforated plate and the static perforated plate are installed according to claim 1, 3 or 4, in order to further enhance the plug flowability of the powder described before, the suppressing back-mixing of the powder in the powder bed to be fluidized is effective, for the sake of it, by equalizing the flow velocity of the aerated fluidizing gas to the minimum fluidizing velocity of the particles or lower than it, so that the powder becomes stationary, by the horizontal annular swinging motion of the swinging perforated plate the powder described before is swung in the horizontal direction, the powder processing devices according to claim 1 in which the back-mixing of the powder bed is suppressing, the bulk density is averaged, and the plug flow property can be further improved.

6. In the multi-stage fluidized bed in which the swinging perforated plate and the static perforated plate are installed according to claim 5, the gas distribution plate at the bottom of the bed is used as one of the static perforated plates, in the case of using a fine powder such as Geldart's C particles, which is considered to be difficult to fluidize, the fluidization of the powder bed described reduces its bulk density, the swinging motion described of the swinging perforated plate described is hard to transmit to the powder described, the powder processing devices according to claim 5, wherein protrusions are provided on both upper and lower surfaces of swinging perforated plate described in order to increase the efficiency of transmission of the swinging motion described to the powder described.

7. In order to improve the plug flow property of the powder in the multi-stage fluidized bed, the height of the fluidized bed should be lowered with respect to the horizontal movement distance of the powder in each stage of the fluidized bed, and the shallow fluidized bed is preferable, but at this time, as described above, the dispersion plate at the bottom of the fluidized bed is used as the static perforated plate, and the swinging perforated plate is placed near the center height of the fluidized bed, furthermore, a static perforated plate is installed near the upper surface of the fluidized bed, in this fluidized bed, when using fine powder such as Geldart's C particles, which is considered to be difficult to fluidize, since the bulk density of the fluidized bed decreases as described above, a sufficient frictional force does not work between the fluidized powder and the lower surface of the static perforated plate installed near the upper interface of the fluidized bed, the bulk density of this fluidized bed is not averaged due to the lack of sufficient shear stress, in this case, in place of the static perforated plate, in each stage of the multi- stage fluidized bed, a vertical flat plate or a strip type vertical plate that reaches from the lower surface of the upper dispersing plate to the inside of the powder bed and that does not come into contact with the protrusions on the upper surface of the swinging perforated plate is placed in the fluidized bed, the powder processing devices according to claim 5, wherein a shearing stress is generated in the fluidized bed to average the bulk density of the powder in the fluidized bed using the fine powder that is difficult to fluidize by restraining the horizontal motion of the powder above the fluidized bed.

[Fig. 1]

**(Geldart, D. Powder Technology, 1, 285, 1973)**
**Applies at Ambient Conditions**

[Fig.2]

$$\tau = \eta \times U/H$$

[Fig.3]

[Fig.4]

[Fig.5]

[Fig.6]

[Fig.7]

[Fig.8]

[Fig.9]

[Fig.10]

[Fig.11]

[Fig.12]

[Fig.13]

[Fig.14]

[Fig.15]

[Fig.16]

[Fig.17]

[Fig.18]

[Fig.19]

[Fig.20]

[Fig.21]

4

39

4

39

[Fig.22]

40    36    4    2    5    34

35

2    34

36    4    5

35

## INTERNATIONAL SEARCH REPORT

| International application No. |
|---|
| PCT/JP2021/014182 |

### A. CLASSIFICATION OF SUBJECT MATTER
Int.Cl. B01J8/02(2006.01)i, B01J8/12(2006.01)i
FI: B01J8/02Z, B01J8/12301

According to International Patent Classification (IPC) or to both national classification and IPC

### B. FIELDS SEARCHED

Minimum documentation searched (classification system followed by classification symbols)
Int.Cl. B01J8/00-B01J8/46, B01F3/06, B01F11/00-B01F11/04

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | Microfilm of the specification and drawings annexed to the request of Japanese Utility Model Application No. 049192/1978 (Laid-open No. 152148/1979) (YASKAWA ELECTRIC MFG CO., LTD.) 23 October 1979 (1979-10-23), claims, page 4, lines 6-20, fig. 1, 2 | 7<br>1, 6-7<br>2-5, 8 |
| Y<br>A | JP 62-125821 A (JAPAN STEEL WORKS LTD.) 08 June 1987 (1987-06-08), claims, page 3, upper left column, line 5 to upper right column, line 16, page 5, lower right column, line 3 to page 7, upper right column, fig. 2 | 1, 6-7<br>2-5, 8 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 May 2021 | 08 June 2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2021/014182 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Microfilm of the specification and drawings annexed to the request of Japanese Utility Model Application No. 40746/1988 (Laid-open No. 151882/1989) (KANEKO AGRICULT MACHINERY) 19 October 1989 (1989-10-19) | 1-8 |
| A | WO 2019/126654 A1 (CUELLO, J. L.) 27 June 2019 (2019-06-27) | 1-8 |
| A | JP 2015-525122 A (RESODYN CORPORATION) 03 September 2015 (2015-09-03) | 1-8 |
| A | US 2741546 A (ESSO RESEARCH AND ENGINEERING COMPANY) 10 April 1956 (1956-04-10) | 8 |

Form PCT/ISA/210 (second sheet) (January 2015)

INTERNATIONAL SEARCH REPORT
Information on patent family members

International application No.

PCT/JP2021/014182

```
JP 54-152148 U1    23 October 1979    (Family: none)

JP 62-125821 A     08 June 1987       (Family: none)

JP 1-151882 U1     19 October 1989    (Family: none)

WO 2019/126654 A1  27 June 2019       US 2020/0318052 A

JP 2015-525122 A   03 September 2015  US 2013/0329514 A
                                      US 2015/0146496 A
                                      US 2017/0348667 A
                                      US 2019/0060852 A
                                      US 2019/0321795 A
                                      WO 2013/181625 A
                                      WO 2019/040835 A

US 2741546 A       10 April 1956      (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4125185 A
- JP 2018065134 A
- JP 9290143 A
- JP 56020992 A
- JP 57127422 A
- JP 59210293 A

**Non-patent literature cited in the description**

- **GELDART D.** *Powder Technology,* 1973, vol. 1, 285
- *Chemical Engineering Handbook,* 1446
- **PHILIP C. CARMAN.** *Trans. Inst. Chem. Engrs.,* 1937